# EUROPEAN PATENT SPECIFICATION

(11) **EP 4 561 150 B1**
(45) Date of publication and mention of the grant of the patent: **28.10.2026**
(21) Application number: 23851423.6
(22) Date of filing: 28.06.2023
(51) Int. Cl.: H04W 24/02, H04L 1/1825, H04L 1/1867, H04L 1/18, H04L 1/1812, H04L 1/1822

(54) **COMMUNICATION METHOD AND APPARATUS, AND STORAGE MEDIUM**
KOMMUNIKATIONSVERFAHREN UND -VORRICHTUNG SOWIE SPEICHERMEDIUM
PROCÉDÉ ET APPAREIL DE COMMUNICATION, AINSI QUE SUPPORT DE STOCKAGE

(30) Priority: 10.08.2022 CN 202210957845
(43) Date of publication of application: 28.05.2025
(73) Proprietor: Huawei Technologies Co., Ltd., Shenzhen, Guangdong 518129 (CN)
(72) Inventor: CHEN, Ying, Shenzhen, Guangdong 518129 (CN); YANG, Ruonan, Shenzhen, Guangdong 518129 (CN); WANG, Jun, Shenzhen, Guangdong 518129 (CN)
(74) Representative: Körber, Martin Hans
(86) International application number: PCT/CN2023/103430
(87) International publication number: WO 2024/032196

(56) References cited:
- WO-A1-2020/192430
- WO-A1-2022/075344
- CN-A- 111 756 480
- CN-A- 112 532 356
- CN-A- 114 223 295
- CN-A- 114 258 722
- CN-A- 114 731 235
- US-A1- 2023 379 090
- US-A1- 20250 219 767

## Description

### TECHNICAL FIELD

This application relates to the field of communication technologies, and in particular, to a communication method and apparatus, and a storage medium.

### BACKGROUND

Currently, in some communication systems with long communication delays, for example, in a satellite communication system, a hybrid automatic repeat request (hybrid automatic repeat request, HARQ) disabling mechanism is introduced to a terminal in 5th-generation (5th-Generation, 5G) communication, and a base station may indicate, by using radio resource control (radio resource control, RRC) signaling, that a HARQ process is disabled. However, the HARQ process is disabled by triggering RRC reconfiguration, resulting in low scheduling flexibility and a long scheduling delay.

WO 2022/075344 A1 and US 2023/0379090 A1 disclose user equipments, base stations and signaling for downlink support of non-terrestrial networks.

WO 2020/192430 A1 and US 2025/219767 A disclose a HARQ process disabling method, a receiving device, and a sending device in communication, the method including a receiving device obtaining indication data, where the indication data is used to indicate to disable a HARQ process, and the receiving device disabling the HARQ process.

### SUMMARY

The invention is defined in the independent claims. Additional features of the invention are provided in the dependent claims. In the following, parts of the description and drawings referring to embodiments which are not covered by the claims are not presented as embodiments of the invention, but as examples useful for understanding the invention. Embodiments of this application provide a communication method and apparatus, and a storage medium, to improve flexible scheduling for enabling or disabling a HARQ process, and reduce a scheduling delay.

According to a first aspect, an embodiment of this application provides a communication method, including: A terminal device receives first information sent by a network device, where the first information includes configuration information of an m^{th} hybrid automatic repeat request HARQ process; the terminal device determines, based on a quantity that is of time units of a downlink time domain resource and that is determined from the configuration information and/or based on an MCS index in the configuration information, whether the m^{th} HARQ process of M HARQ processes between the terminal device and the network device is enabled or disabled, where the m^{th} HARQ process is configured as a dynamically adjustable HARQ process; and M is greater than or equal to m, and m is greater than or equal to 1; and the terminal device performs communication based on a result of the determining.

According to the communication method provided in the first aspect, the terminal device and the network device determine, based on the quantity of time units of the downlink time domain resource and/or the MCS index, whether the HARQ process between the terminal device and the network device is enabled or disabled, to avoid always dynamically adjusting the HARQ process based on RRC signaling, improve flexibility of scheduling the HARQ process, and reduce a scheduling delay.

In a possible implementation, that the terminal device determines, based on a quantity that is of time units of a downlink time domain resource and that is determined from the configuration information and/or based on an MCS index in the configuration information, whether the m^{th} HARQ process of M HARQ processes between the terminal device and the network device is enabled or disabled includes: The terminal device determines, when the quantity of time units of the downlink time domain resource and a first threshold meet a first relationship, and/or the MCS index in the configuration information and a second threshold meet a second relationship, that the m^{th} HARQ process is disabled, where the first relationship includes one of the following: the quantity of time units of the downlink time domain resource is greater than or equal to the first threshold; or the quantity of time units of the downlink time domain resource is less than or equal to the first threshold; and the second relationship includes one of the following: the MCS index is less than or equal to the second threshold; and the MCS index is greater than or equal to the second threshold.

According to the communication method provided in this implementation, when it is determined, based on the quantity of time units of the downlink time domain resource, whether the m^{th} HARQ process is enabled or disabled, there is a long delay in transmitting the downlink information between the network device and the terminal device when there are a large quantity of time units of the downlink time domain resource occupied by downlink information. Disabling the m^{th} HARQ process can reduce a communication delay between the network device and the terminal device, or in consideration of relatively small impact of feedback of the downlink information on throughput performance of a communication system, the m^{th} HARQ process is not disabled, to improve communication reliability. When it is determined, based on the MCS index, whether the m^{th} HARQ process is enabled or disabled, a smaller MCS index indicates a lower transmission rate of second downlink information, that is, a smaller quantity of valid bits carried in an RE. Disabling the m^{th} HARQ process can reduce a communication delay between the network device and the terminal device, and improve the throughput performance of the communication system, or in consideration of large impact of downlink information transmission on the throughput performance of the communication system when the transmission rate is low, and relatively small impact of downlink information feedback on the throughput performance of the system, the HARQ process is not disabled, to improve communication reliability. In addition, the terminal device may comprehensively determine, with reference to the quantity N of time units of the downlink time domain resource and the MCS index, whether the m^{th} HARQ process is enabled or disabled, to improve accurate control over enabling or disabling the HARQ process.

Optionally, that the terminal device determines, based on a quantity that is of time units of a downlink time domain resource and that is determined from the configuration information and/or based on an MCS index in the configuration information, whether the m^{th} HARQ process of M HARQ processes between the terminal device and the network device is enabled or disabled includes: The terminal device determines, when the quantity of time units of the downlink time domain resource and a first threshold do not meet a first relationship, or the MCS index in the configuration information and a second threshold do not meet a second relationship, that the m^{th} HARQ process is enabled, where the first relationship includes one of the following: the quantity of time units of the downlink time domain resource is greater than or equal to the first threshold; or the quantity of time units of the downlink time domain resource is less than or equal to the first threshold; and the second relationship includes one of the following: the MCS index is greater than or equal to the second threshold; and the MCS index is less than or equal to the second threshold.

In a possible implementation, the first threshold and/or the second threshold are/is related to M.

According to the communication method provided in this implementation, a quantity of HARQ processes may reflect a communication delay between the terminal device and the network device, and the first threshold and/or the second threshold is related to the quantity of HARQ processes, so that dynamic adjustment of a HARQ process can be accurately controlled.

In a possible implementation, the first threshold and/or the second threshold are/is related to a first parameter, and the first parameter includes at least one of the following: a communication delay between the terminal device and the network device; a communication distance between the terminal device and the network device; or a type of the network device.

According to the communication method provided in this implementation, dynamic adjustment of a HARQ process is accurately controlled.

In a possible implementation, the method further includes: The terminal device receives threshold configuration information sent by the network device, where the threshold configuration information is used to configure the first threshold and/or the second threshold.

According to the communication method provided in this implementation, a threshold is flexibly scheduled.

In a possible implementation, before the terminal device receives the first information sent by the network device, the method further includes: The terminal device sends a status adjustment request to the network device, where the status adjustment request is used to request that the m^{th} HARQ process is enabled or disabled.

According to the communication method provided in this implementation, when dynamically adjusting a HARQ process, the network device may flexibly control dynamic adjustment of the HARQ process with reference to an adjustment requirement of the terminal device for the HARQ process, to meet different communication scenarios.

In a possible implementation, the method further includes: The terminal device receives first indication information sent by the network device, where the first indication information indicates that the terminal device is allowed to adjust the dynamically adjustable HARQ process.

According to the communication method provided in this implementation, a capability of controlling dynamic adjustment of a HARQ process by the network device is improved, to facilitate application to different communication scenarios.

In a possible implementation, before the terminal device receives the first indication information sent by the network device, the method further includes: The terminal device sends capability information to the network device, where the capability information indicates that the terminal device has a capability of adjusting the dynamically adjustable HARQ process.

According to the communication method provided in this implementation, a terminal device that does not have a dynamic adjustment capability does not perform only dynamic adjustment on a HARQ, to improve reliability of dynamic adjustment on a HARQ process, and information related to dynamic adjustment is not sent to the terminal device that does not have a dynamic adjustment capability, to reduce system overheads.

In a possible implementation, the method further includes: the m^{th} HARQ process is enabled, where a first bit in the configuration information indicates a feedback resource and/or a feedback parameter of feedback information sent based on the m^{th} HARQ process; or the m^{th} HARQ process is disabled, where a first bit in the configuration information indicates to perform data transmission enhancement on the m^{th} HARQ process.

According to the communication method provided in this implementation, when the m^{th} HARQ is disabled, the first bit is reused, to implement data transmission enhancement and reduce signaling overheads.

In a possible implementation, the method further includes: The terminal device determines, based on a first event, that the m^{th} HARQ process is restored to an initial state, where the initial state is preset or is indicated by control signaling, where the first event includes one of the following: the terminal device receives second indication information sent by the network device, where the second indication information indicates to stop adjusting the m^{th} HARQ process; or a preset valid time period for dynamic adjustment ends.

According to the communication method provided in this implementation, the dynamically adjusted HARQ process can be restored to an initial state, to flexibly control the HARQ process.

Optionally, the quantity of time units of the downlink time domain resource is related to one or a combination of the following in the configuration information: a quantity of transport blocks TBs; a quantity of repetitions; and a quantity of time units occupied by one repetition of each TB.

According to a second aspect, an embodiment of this application provides a communication method, including: A terminal device receives first downlink information sent by a network device, where the first downlink information is downlink information that has a feedback requirement; the terminal device sends feedback information of the first downlink information by using an nth HARQ process of M HARQ processes, where the M HARQ processes include at least one dynamically adjustable HARQ process, M is greater than or equal to n, and n is greater than or equal to 1; and the terminal device determines that the nth HARQ process is enabled.

According to the communication method provided in the second aspect, the first downlink information that has a feedback requirement is fed back by using one of the M HARQ processes, to ensure that the first downlink information that has a feedback requirement can be fed back, to improve communication reliability and flexibly schedule the HARQ process.

Optionally, the first downlink information is carried in a MAC CE.

In a possible implementation, the method further includes: The terminal device determines, based on a first event, that the nth HARQ process is restored to an initial state, where the initial state is preset or is indicated by control signaling, where the first event includes one of the following: the terminal device receives second indication information sent by the network device, where the second indication information indicates to stop the terminal device from adjusting the nth HARQ process; or a preset valid time period ends.

According to the communication method provided in this implementation, the dynamically adjusted HARQ process can be restored to an initial state, to flexibly control the HARQ process.

According to a third aspect, an embodiment of this application provides a communication method, including: A network device determines a transmission parameter of an m^{th} HARQ process, where the transmission parameter includes a quantity of time units of a downlink time domain resource and/or an MCS index; the network device determines, based on the transmission parameter, whether the m^{th} HARQ process of M HARQ processes between a terminal device and the network device is enabled or disabled, where the m^{th} HARQ process is configured as a dynamically adjustable HARQ process; and M is greater than or equal to m, and m is greater than or equal to 1; and the network device performs communication based on a result of the determining.

In a possible implementation, that the network device determines, based on the transmission parameter, whether the m^{th} HARQ process of M HARQ processes between the terminal device and the network device is enabled or disabled includes: The network device determines, when the quantity of time units of the downlink time domain resource and a first threshold meet a first relationship, and/or the MCS index in the configuration information and a second threshold meet a second relationship, that the m^{th} HARQ process is disabled, where the first relationship includes one of the following: the quantity of time units of the downlink time domain resource is greater than or equal to the first threshold; or the quantity of time units of the downlink time domain resource is less than or equal to the first threshold; and the second relationship includes one of the following: the MCS index is less than or equal to the second threshold; and the MCS index is greater than or equal to the second threshold.

In a possible implementation, that the network device determines, based on the transmission parameter, whether the m^{th} HARQ process of M HARQ processes between the terminal device and the network device is enabled or disabled includes: The network device determines, when the quantity of time units of the downlink time domain resource and a first threshold do not meet a first relationship, or the MCS index in the configuration information and a second threshold do not meet a second relationship, that the m^{th} HARQ process is enabled, where the first relationship includes one of the following: the quantity of time units of the downlink time domain resource is greater than or equal to the first threshold; or the quantity of time units of the downlink time domain resource is less than or equal to the first threshold; and the second relationship includes one of the following: the MCS index is greater than or equal to the second threshold; and the MCS index is less than or equal to the second threshold.

In a possible implementation, the first threshold and/or the second threshold are/is related to M.

In a possible implementation, the first threshold and/or the second threshold are/is related to a first parameter, and the first parameter includes at least one of the following: a communication delay between the terminal device and the network device; or a communication distance between the terminal device and the network device; or a type of the network device.

In a possible implementation, the method further includes: The network device sends threshold configuration information to the terminal device, where the threshold configuration information is used to configure the first threshold and/or the second threshold.

In a possible implementation, the method further includes: The network device sends first information to the terminal device, where the first information includes the configuration information of the m^{th} HARQ process, the configuration information is used to determine the quantity of time units of the downlink time domain resource, and/or the configuration information includes the MCS index.

In a possible implementation, before the network device sends the first information to the terminal device, the method further includes: The network device receives a status adjustment request sent by the terminal device, where the status adjustment request is used to request that the m^{th} HARQ process is enabled or disabled.

In a possible implementation, the method further includes: The network device sends first indication information to the terminal device, where the first indication information indicates that the terminal device is allowed to adjust the dynamically adjustable HARQ process.

In a possible implementation, before the network device sends the first indication information to the terminal device, the method further includes: The network device receives capability information sent by the terminal device, where the capability information indicates that the terminal device has a capability of adjusting the dynamically adjustable HARQ process.

In a possible implementation, the method further includes: the m^{th} HARQ process is enabled, where a first bit in the configuration information indicates a feedback resource and/or a feedback parameter of feedback information sent based on the m^{th} HARQ process; or the m^{th} HARQ process is disabled, where a first bit in the configuration information indicates to perform data transmission enhancement on the m^{th} HARQ process.

In a possible implementation, the method further includes: The network device sends second indication information to the terminal device, where the second indication information indicates to stop adjusting the m^{th} HARQ process.

In a possible implementation, the quantity of time units of the downlink time domain resource is related to one or a combination of the following in the configuration information: a quantity of transport blocks TBs; a quantity of repetitions; and a quantity of time units occupied by one repetition of each TB.

For beneficial effect of the communication method provided in the third aspect and the possible implementations of the third aspect, refer to the beneficial effect brought by the first aspect and the possible implementations of the first aspect. Details are not described herein again.

According to a fourth aspect, an embodiment of this application provides a communication method, including: A network device sends first downlink information to a terminal device, where the first downlink information is downlink information that has a feedback requirement; the network device receives feedback information of the first downlink information sent by the terminal device by using an nth HARQ process of M HARQ processes, where the M HARQ processes include at least one dynamically adjustable HARQ process, M is greater than or equal to n, and n is greater than or equal to 1; and the network device determines that the nth HARQ process is enabled.

In a possible implementation, the first downlink information is carried in a MAC CE.

In a possible implementation, the method further includes: The network device sends second indication information to the terminal device, where the second indication information indicates to stop the terminal device from adjusting the nth HARQ process.

For beneficial effect of the communication method provided in the fourth aspect and the possible implementations of the fourth aspect, refer to the beneficial effect brought by the second aspect and the possible implementations of the second aspect. Details are not described herein again.

According to a fifth aspect, an embodiment of this application provides a communication apparatus, including: a transceiver unit, configured to receive first information sent by a network device, where the first information includes configuration information of an m^{th} hybrid automatic repeat request HARQ process; and a processing unit, configured to determine, based on a quantity that is of time units of a downlink time domain resource and that is determined from the configuration information and/or based on an MCS index in the configuration information, whether the m^{th} HARQ process of M HARQ processes between the communication apparatus and the network device is enabled or disabled, where the m^{th} HARQ process is configured as a dynamically adjustable HARQ process; and M is greater than or equal to m, and m is greater than or equal to 1; and the processing unit is further configured to perform communication based on a result of the determining.

In a possible implementation, the processing unit is specifically configured to: determine, when the quantity of time units of the downlink time domain resource and a first threshold meet a first relationship, and/or the MCS index in the configuration information and a second threshold meet a second relationship, that the m^{th} HARQ process is disabled, where the first relationship includes one of the following: the quantity of time units of the downlink time domain resource is greater than or equal to the first threshold; or the quantity of time units of the downlink time domain resource is less than or equal to the first threshold; and the second relationship includes one of the following: the MCS index is less than or equal to the second threshold; and the MCS index is greater than or equal to the second threshold.

In a possible implementation, the processing unit is specifically configured to: determine, when the quantity of time units of the downlink time domain resource and a first threshold do not meet a first relationship, or the MCS index in the configuration information and a second threshold do not meet a second relationship, that the m^{th} HARQ process is enabled, where the first relationship includes one of the following: the quantity of time units of the downlink time domain resource is greater than or equal to the first threshold; or the quantity of time units of the downlink time domain resource is less than or equal to the first threshold; and the second relationship includes one of the following: the MCS index is greater than or equal to the second threshold; and the MCS index is less than or equal to the second threshold.

In a possible implementation, the first threshold and/or the second threshold are/is related to M.

In a possible implementation, the first threshold and/or the second threshold are/is related to a first parameter, and the first parameter includes at least one of the following: a communication delay between the communication apparatus and the network device; a communication distance between the communication apparatus and the network device; or a type of the network device.

In a possible implementation, the transceiver unit is further configured to receive threshold configuration information sent by the network device, where the threshold configuration information is used to configure the first threshold and/or the second threshold.

In a possible implementation, the transceiver unit is further configured to send a status adjustment request to the network device, where the status adjustment request is used to request that the m^{th} HARQ process is enabled or disabled.

In a possible implementation, the communication apparatus further includes: the transceiver unit receives first indication information sent by the network device, where the first indication information indicates that the communication apparatus is allowed to adjust the dynamically adjustable HARQ process.

In a possible implementation, the transceiver unit is further configured to send capability information to the network device, where the capability information indicates that the communication apparatus has a capability of adjusting the dynamically adjustable HARQ process.

In a possible implementation, the m^{th} HARQ process is enabled, where a first bit in the configuration information indicates a feedback resource and/or a feedback parameter of feedback information sent based on the m^{th} HARQ process; or the m^{th} HARQ process is disabled, where a first bit in the configuration information indicates to perform data transmission enhancement on the m^{th} HARQ process.

In a possible implementation, the processing unit is further configured to determine, based on a first event, that the m^{th} HARQ process is restored to an initial state, where the initial state is preset or is indicated by control signaling; and the first event includes one of the following: the communication apparatus receives second indication information sent by the network device, where the second indication information indicates to stop adjusting the m^{th} HARQ process; or a preset valid time period for dynamic adjustment ends.

In a possible implementation, the quantity of time units of the downlink time domain resource is related to one or a combination of the following in the configuration information: a quantity of transport blocks TBs; a quantity of repetitions; and a quantity of time units occupied by one repetition of each TB.

For beneficial effect of the communication apparatus provided in the fifth aspect and the possible implementations of the fifth aspect, refer to the beneficial effect brought by the first aspect and the possible implementations of the first aspect. Details are not described herein again.

According to a sixth aspect, an embodiment of this application provides a communication apparatus, including: a transceiver unit, configured to receive first downlink information sent by a network device, where the first downlink information is downlink information that has a feedback requirement; and the transceiver unit is further configured to send feedback information of the first downlink information by using an nth HARQ process of M HARQ processes, where the M HARQ processes include at least one dynamically adjustable HARQ process, M is greater than or equal to n, and n is greater than or equal to 1; and a processing unit, configured to determine that the nth HARQ process is enabled.

In a possible implementation, the first downlink information is carried in a media access control control element MAC CE.

In a possible implementation, the processing unit is further configured to determine, based on a first event, that the nth HARQ process is restored to an initial state, where the initial state is preset or is indicated by control signaling. The first event includes one of the following: the communication apparatus receives second indication information sent by the network device, where the second indication information indicates to stop adjusting the nth HARQ process; or a preset valid time period ends.

For beneficial effect of the communication apparatus provided in the sixth aspect and the possible implementations of the sixth aspect, refer to the beneficial effect brought by the second aspect and the possible implementations of the second aspect. Details are not described herein again.

According to a seventh aspect, an embodiment of this application provides a communication apparatus, including: a processing unit, configured to determine a transmission parameter of an m^{th} HARQ process, where the transmission parameter includes a quantity of time units of a downlink time domain resource and/or an MCS index; the processing unit is further configured to determine, based on the transmission parameter, whether the m^{th} HARQ process of M HARQ processes between a terminal device and the communication apparatus is enabled or disabled, where the m^{th} HARQ process is configured as a dynamically adjustable HARQ process; M is greater than or equal to m, and m is greater than or equal to 1; and the processing unit is further configured to perform communication based on a result of the determining.

In a possible implementation, the processing unit is specifically configured to: determine, when the quantity of time units of the downlink time domain resource and a first threshold meet a first relationship, and/or the MCS index in the configuration information and a second threshold meet a second relationship, that the m^{th} HARQ process is disabled, where the first relationship includes one of the following: the quantity of time units of the downlink time domain resource is greater than or equal to the first threshold; or the quantity of time units of the downlink time domain resource is less than or equal to the first threshold; and the second relationship includes one of the following: the MCS index is less than or equal to the second threshold; and the MCS index is greater than or equal to the second threshold.

In a possible implementation, the processing unit is specifically configured to: determine, when the quantity of time units of the downlink time domain resource and a first threshold do not meet a first relationship, or the MCS index in the configuration information and a second threshold do not meet a second relationship, that the m^{th} HARQ process is enabled, where the first relationship includes one of the following: the quantity of time units of the downlink time domain resource is greater than or equal to the first threshold; or the quantity of time units of the downlink time domain resource is less than or equal to the first threshold; and the second relationship includes one of the following: the MCS index is greater than or equal to the second threshold; and the MCS index is less than or equal to the second threshold.

In a possible implementation, the first threshold and/or the second threshold are/is related to M.

In a possible implementation, the first threshold and/or the second threshold are/is related to a first parameter, and the first parameter includes at least one of the following: a communication delay between the terminal device and the communication apparatus; a communication distance between the terminal device and the communication apparatus; or a type of the communication apparatus.

In a possible implementation, the transceiver unit is further configured to send threshold configuration information to the terminal device, where the threshold configuration information is used to configure the first threshold and/or the second threshold.

In a possible implementation, the transceiver unit is further configured to send first information to the terminal device, where the first information includes the configuration information of the m^{th} HARQ process, the configuration information is used to determine the quantity of time units of the downlink time domain resource, and/or the configuration information includes the MCS index.

In a possible implementation, the transceiver unit is further configured to receive a status adjustment request sent by the terminal device, where the status adjustment request is used to request that the m^{th} HARQ process is enabled or disabled.

In a possible implementation, the transceiver unit is further configured to send first indication information to the terminal device, where the first indication information indicates that the terminal device is allowed to adjust the dynamically adjustable HARQ process.

In a possible implementation, the transceiver unit is further configured to receive capability information sent by the terminal device, where the capability information indicates that the terminal device has a capability of adjusting the dynamically adjustable HARQ process.

In a possible implementation, the m^{th} HARQ process is enabled, where a first bit in the configuration information indicates a feedback resource and/or a feedback parameter of feedback information sent based on the m^{th} HARQ process; or the m^{th} HARQ process is disabled, where a first bit in the configuration information indicates to perform data transmission enhancement on the m^{th} HARQ process.

In a possible implementation, the transceiver unit is further configured to send second indication information to the terminal device, where the second indication information indicates to stop adjusting the m^{th} HARQ process.

In a possible implementation, the quantity of time units of the downlink time domain resource is related to one or a combination of the following in the configuration information: a quantity of transport blocks TBs; a quantity of repetitions; and a quantity of time units occupied by one repetition of each TB.

For beneficial effect of the communication apparatus provided in the seventh aspect and the possible implementations of the seventh aspect, refer to the beneficial effect brought by the first aspect and the possible implementations of the first aspect. Details are not described herein again.

According to an eighth aspect, an embodiment of this application provides a communication apparatus, including: a transceiver unit, configured to send first downlink information to a terminal device, where the first downlink information is downlink information that has a feedback requirement; and the transceiver unit is further configured to receive feedback information of the first downlink information sent by the terminal device by using an nth HARQ process of M HARQ processes, where the M HARQ processes include at least one dynamically adjustable HARQ process, M is greater than or equal to n, and n is greater than or equal to 1; and a processing unit, configured to determine that the nth HARQ process is enabled.

In a possible implementation, the first downlink information is carried in a MAC CE.

In a possible implementation, the transceiver unit is further configured to send second indication information to the terminal device, where the second indication information indicates to stop adjusting the nth HARQ process.

For beneficial effect of the communication apparatus provided in the eighth aspect and the possible implementations of the eighth aspect, refer to the beneficial effect brought by the second aspect and the possible implementations of the second aspect. Details are not described herein again.

According to a ninth aspect, an embodiment of this application provides a communication device, including a processor and a memory. The memory is configured to store a computer program, and the processor is configured to invoke the computer program stored in the memory and run the computer program, to perform the method in any one of the first aspect, the second aspect, the third aspect, the fourth aspect, or the possible implementations.

According to a tenth aspect, an embodiment of this application provides a communication system, including a terminal device and a network device, where the terminal device is configured to perform the method in the first aspect, the second aspect, or the possible implementations, and the network device is configured to perform the method in the third aspect, the fourth aspect, or the possible implementations.

According to an eleventh aspect, an embodiment of this application provides a chip, including a processor, configured to invoke computer instructions from a memory and run the computer instructions, to enable a device in which the chip is installed to perform the method in any one of the first aspect, the second aspect, the third aspect, the fourth aspect, or the possible implementations.

According to a twelfth aspect, an embodiment of this application provides a computer-readable storage medium, configured to store computer program instructions, and the computer program enables a computer to perform the method in any one of the first aspect, the second aspect, the third aspect, the fourth aspect, or the possible implementations.

According to a thirteenth aspect, an embodiment of this application provides a computer program product, including computer program instructions, where the computer program instructions enable a computer to perform the method in any one of the first aspect, the second aspect, the third aspect, the fourth aspect, or the possible implementations.

### BRIEF DESCRIPTION OF DRAWINGS

FIG. 1 is a schematic diagram of a satellite communication system according to an embodiment of this application;
FIG. 1A is a schematic diagram of a satellite communication system according to an embodiment of this application;
FIG. 1B is a schematic diagram of a satellite communication system according to an embodiment of this application;
FIG. 1C is a schematic diagram of a satellite communication system according to an embodiment of this application;
FIG. 2 is a schematic diagram of an interaction procedure of a communication method according to an embodiment of this application;
FIG. 3 is a schematic diagram of an interaction procedure of a communication method according to an embodiment of this application;
FIG. 4 is a schematic block diagram of an apparatus according to an embodiment of this application; and
FIG. 5 is another schematic block diagram of an apparatus according to an embodiment of this application.

### DESCRIPTION OF EMBODIMENTS

The following describes technical solutions of this application with reference to accompanying drawings.

A communication method provided in this application may be applied to various communication systems, for example, a Global System for Mobile Communications (Global System for Mobile communications, GSM) system, a Code Division Multiple Access (Code Division Multiple Access, CDMA) system, a Wideband Code Division Multiple Access (Wideband Code Division Multiple Access, WCDMA) system, General Packet Radio Service (General Packet Radio Service, GPRS), a Long Term Evolution (Long Term Evolution, LTE) system, an Advanced Long Term Evolution (Advanced long term evolution, LTE-A) system, a New Radio (New Radio, NR) system, an evolved system of an NR system, an LTE-based access to unlicensed spectrum (LTE-based access to unlicensed spectrum, LTE-U) system, an NR-based access to unlicensed spectrum (NR-based access to unlicensed spectrum, NR-U) system, a non-terrestrial networks (Non-Terrestrial Networks, NTN) system, a Universal Mobile Telecommunications System (Universal Mobile Telecommunications System, UMTS), a wireless local area network (Wireless Local Area Network, WLAN), wireless fidelity (Wireless Fidelity, Wi-Fi), a 5th-generation (5th-Generation, 5G) communication system, another communication system, or a future communication system (for example, a 6th-generation communication system).

Compared with terrestrial communication, satellite communication has unique advantages. For example, the satellite communication can provide wider coverage, and satellite base stations are not vulnerable to natural disasters or external forces. If satellite communication is introduced to 5G communication, communication services can be provided for some areas that cannot be covered by terrestrial communication networks, such as oceans and forests; reliability of the 5G communication is enhanced, for example, it is ensured that airplanes, trains, and users on these transportations can obtain better communication services; and more data transmission resources are provided for the 5G communication, to improve network rates. Therefore, supporting both the terrestrial communication and the satellite communication is an inevitable trend of the 5G communication, and has great benefits in terms of wide coverage, reliability, multi-connection, a high throughput, and the like.

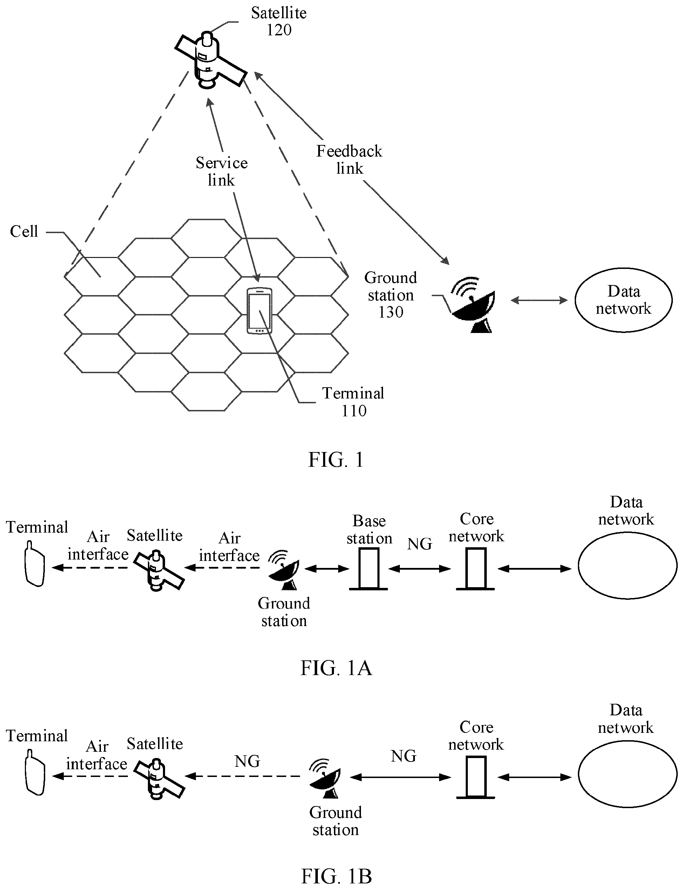

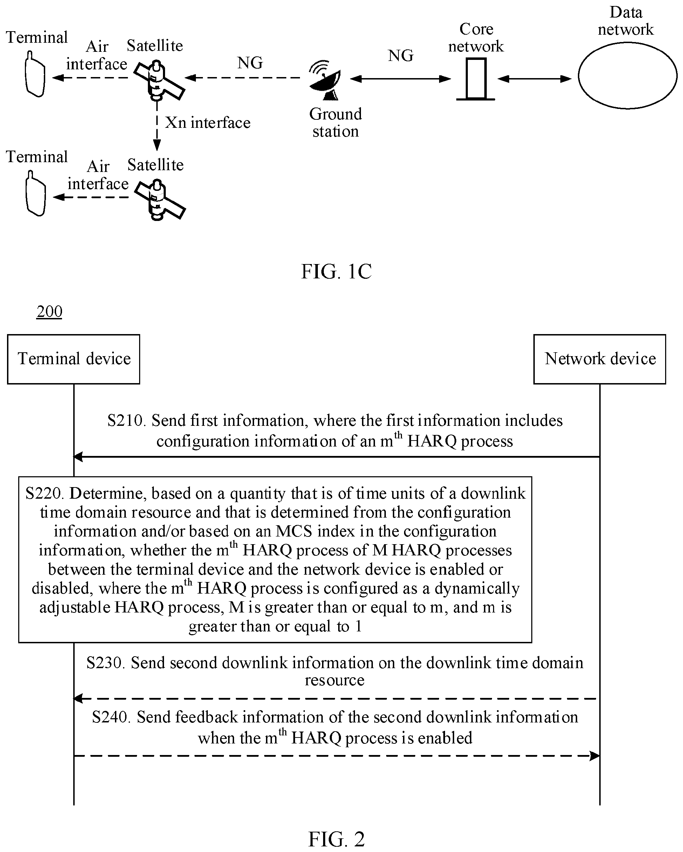

The technical solutions provided in embodiments of this application may be applied to a satellite communication system shown in FIG. 1. An architecture of the system may include a terminal 110, a satellite 120, and a ground station 130.

The terminal 110 may be an access terminal, a user equipment (User Equipment, UE) unit, a UE station, a mobile station, a mobile station, a remote station, a remote terminal, a mobile device, a UE terminal, a terminal, a wireless communication device, a UE agent, a UE apparatus, a virtual reality terminal device, an augmented reality terminal device, a wireless terminal in industry control, or the like. The access terminal may be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device or another processing device connected to a wireless modem, a vehicle-mounted device, a wearable device, a terminal in a 5G network, a terminal in a future-evolved PLMN network, or the like.

The satellite 120 corresponds to a service coverage area, and the terminal entering the area may receive a wireless access service by using the satellite 120. The service coverage area of the satellite 120 on the ground is divided into a plurality of cells, and one beam of the satellite 120 may correspond to one cell. The terminal 110 receives a communication service of the satellite 120 by accessing the cell. The satellite 120 may be a geostationary earth orbit (geostationary earth orbit, GEO) satellite, or may be a none-geostationary earth orbit (none-geostationary earth orbit, NGEO) satellite which is alternatively referred to as a Non-GEO satellite, where the NGEO satellite includes a low earth orbit (low earth orbit, LEO) satellite, a medium earth orbit (medium earth orbit, MEO) satellite, or the like.

The ground station 130 is configured to connect the satellite 120 to a terrestrial network. For example, the ground station 130 may connect the satellite 120 to a core network, and connect to a data network by using the core network. One GEO satellite may be served by one or more ground stations. The one or more ground stations are distributed in a target coverage area of the satellite. One NGEO satellite is connected to and served by one ground station simultaneously.

A wireless connection between the ground station 130 and the satellite 120 is referred to as a feeder link (feeder link). A wireless connection between the terminal 110 and the satellite 120 is referred to as a service link (service link).

It should be noted that the architecture of the system shown in FIG. 1 is merely an example, and is not intended to limit the technical solutions of this application. A person skilled in the art should understand that in a specific implementation process, the architecture of the system may further include another device, for example, a base station or a core network device.

In some embodiments, the architecture of the system shown in FIG. 1 may be in a form shown in FIG. 1A.

In FIG. 1A, a data network provides a data service for a terminal.

Main functions of the core network are to provide a user connection, user management, and a service bearer, and the core network functions as a bearer network to provide an interface to an external network. The user management includes user mobility management, call management, route management, security management, and the like. Using an NR system as an example, a device in the core network may include an access and mobility control function (access and mobility management function, AMF) entity, a session management function (session management function, SMF) entity, a unified subscription database management (unified data management, UDM) entity, a network slice selection function (network slice selection function, NSSF) entity, and the like. Certainly, the core network may further include other devices and function entities, or other function entities may be used to replace the foregoing function entities to provide the foregoing functions, and a quantity of the function entities may be configured based on a specific requirement. The core network may alternatively be a device or system providing the foregoing functions in a future-evolved system or a plurality of communication convergence systems. This is not limited in embodiments of this application.

The base station provides access and network services for the terminal. The base station may include various forms of base stations, for example, a macro base station, a micro base station (also referred to as a small cell), a relay station, and an access point. For example, the base station may be a node in a 5G NR system network. The 5G node may be an access node, a next-generation NodeB (generation NodeB, gNB), a transmission reception point (transmission receptionpoint, TRP), a transmission point (transmission point, TP), or another access node.

A satellite is used as a forwarding unit to forward signals between the terminal and the base station. The satellite communicates with the base station by using the ground station. The satellite, the ground station, and the base station constitute a radio access network of a satellite communication system.

A new radio air interface is a radio link between the terminal and the base station.

An Xn interface is an interface between 5G base stations and is mainly used for signaling exchange, such as switching.

An NG interface is an interface between a 5G base station and a 5G core network, and exchanges mainly signaling such as NAS of the core network, and user service data.

In some other embodiments, the architecture of the system shown in FIG. 1 may be in a form shown in FIG. 1B. Different from the architecture of the system shown in FIG. 1A, a satellite in FIG. 1B is not only used as a forwarding unit, but also can implement functions of the satellite and the base station in FIG. 1A, to provide a wireless access service for a terminal. In FIG. 1B, the satellite accesses a terrestrial core network by using a ground station.

In some embodiments, satellites have no communication link between each other, and cannot directly communicate with each other. In some other embodiments, as shown in FIG. 1C, there is an inter-satellite link between satellites for direct communication between the satellites.

It should be noted that the architectures of the systems shown in FIG. 1A to FIG. 1C are merely examples, and are not intended to limit the technical solutions of this application. A person skilled in the art should understand that in a specific implementation process, the architecture of the system may further include another device. In addition, in actual application, a quantity of devices in the architecture of the system may be configured as required. For example, in FIG. 1A, one satellite corresponds to one base station, which is merely an example for description. In actual application, one satellite may transfer signals for a plurality of base stations.

Satellite communication is most significantly characterized by high mobility and a long communication delay. To resolve the two problems of satellite communication, 3GPP introduces many enhancement mechanisms in standards, including HARQ disabling. To be specific, a terminal does not need to perform ACK/NACK feedback, and a network side directly schedules a next copy of data without a need of waiting for the feedback from the terminal. Currently, a network device usually indicates, by using RRC signaling, that a HARQ process is disabled. However, the HARQ is disabled by triggering RRC reconfiguration, resulting in low scheduling flexibility and a long scheduling delay. Especially, for a reduced-capability terminal with a small quantity of processes, for example, an internet of things (internet of things, IoT) terminal, it takes a long time to trigger RRC reconfiguration, to further increase a scheduling delay.

For the foregoing technical problems, configuration information of a HARQ process, for example, downlink control information (Downlink Control Information, DCI), is introduced in embodiments of this application. A terminal device may determine, based on a quantity that is of time units of a downlink time domain resource and that is determined from the configuration information and/or based on a modulation and coding scheme (modulation and coding scheme, MCS) index in the configuration information, whether the HARQ process between the terminal device and the network device is enabled or disabled, to avoid always dynamically adjusting the HARQ process based on RRC signaling, improve flexibility of scheduling the HARQ process, and reduce a scheduling delay.

Terms used in this application are first briefly described, to help understand embodiments of this application.
1. HARQ feedback: It may be used to feed back, to a transmit-end device, whether data sent by the transmit-end device is successfully decoded. The data may be, for example, a transport block (transport block, TB).

To ensure a transmission rate, a terminal device generally performs feedback by using a mechanism of parallel transmission of a plurality of HARQ processes. For example, in the 3GPP LTE protocol, in a frequency division duplexing (frequency division duplexing, FDD) mode, each terminal device supports a maximum of eight HARQ processes, and in a time division duplexing (time division duplexing, TDD) mode, each terminal device supports a maximum of 16 HARQ processes. Some reduced-capability terminals, for example, terminal devices in an IoT scenario, use a small quantity of HARQ processes, and these terminal devices use, for example, one HARQ process or two HARQ processes.

In embodiments of this application, when HARQ feedback is not required, that is, when the HARQ process is disabled, a communication delay of a communication system can be reduced; or when HARQ feedback is required, that is, when the HARQ process is enabled, communication reliability is improved. It should be noted that disabling or enabling the HARQ process is dynamic adjustment of the HARQ process. It should be further understood that, disabling the HARQ process does not mean that a HARQ feedback capability is not provided. For example, for some preset service information, HARQ feedback may be performed regardless of whether the HARQ process is enabled or disabled.

2. Time unit: It may be, for example, a slot (slot), a subframe (subframe), a symbol (symbol), or another time unit defined in the future. It should be noted that the time unit is a measurement unit of time domain, and is not necessarily a minimum time unit.

The following describes the method provided in embodiments of this application by using an example in which a subframe is used as a time unit. It may be understood that descriptions of a slot in the following embodiments may also be replaced with other time units, such as a frame, a slot, and a symbol. This is not limited in embodiments of this application.

3. Modulation and coding scheme (modulation and coding scheme, MCS): It defines a quantity of valid bits that can be carried in a resource element (Resource Element, RE). For example, a total of MCS indexes 0 to 31 are included in an MCS table, where the MCS indexes 29 to 31 are reserved. A larger MCS index indicates a larger quantity of valid bits that can be carried in a resource element.

For ease of understanding of embodiments of this application, the following several descriptions are provided.

First, "first", "second", and various numbers in the following embodiments are merely used for differentiation for ease of description, and are not intended to limit the scope of embodiments of this application. For example, different information, thresholds, and parameters are distinguished.

Second, "predefinition" may be implemented by prestoring corresponding code or a corresponding table in a device (for example, including a terminal device and a network device), or may be implemented in another manner that may indicate related information. A specific implementation of predefinition is not limited in this application.

"Preconfiguration" may be implemented by pre-storing corresponding code or a corresponding table in a device (for example, including a terminal device and a network device), or may be implemented in another manner that may indicate related information, or may be implemented by using signaling preconfiguration. For example, the network device is implemented by using signaling preconfiguration. A specific implementation of preconfiguration is not limited in this application.

In embodiments of this application, a preset resource may be a predefined resource, or may be a preconfigured resource, or a resource indicated by a base station by using radio resource control (radio resource control, RRC) and/or downlink control information (downlink control information, DCI).

Third, "protocol" in embodiments of this application may be a standard protocol in the communication field, which may include, for example, an LTE protocol, an NR protocol, and a related protocol used in a future communication system. This is not limited in this application.

Fourth, "at least one" means one or more, and "a plurality of" means two or more. The term "and/or" describes an association relationship between associated objects, and represents that three relationships may exist. For example, A and/or B may represent the following cases: Only A exists, both A and B exist, and only B exists, where A and B may be singular or plural. The character "/" generally indicates an "or" relationship between the associated objects.

The following describes a communication method in embodiments of this application with reference to the accompanying drawings.

It should be understood that, for ease of understanding and description, the following mainly describes the method in embodiments of this application by using interaction between a terminal device and a network device as an example. For example, the terminal device may be the terminal 110 in the satellite communication system shown in FIG. 1, and the network device may be the satellite 120 in the communication system shown in FIG. 1.

However, it should be understood that this should not constitute any limitation on an execution body of the method provided in this application. Any device that can perform, by using a program that can run code of the method provided in embodiments of this application, the method provided in embodiments of this application may be used as an execution body of the method provided in embodiments of this application. For example, the terminal device shown in the following embodiments may also be replaced with a component in the terminal device, for example, a chip, a chip system, or another functional module that can invoke a program and execute the program. The network device shown in the following embodiments may also be replaced with a component in the network device, for example, a chip, a chip system, or another functional module that can invoke a program and execute the program.

FIG. 2 is a schematic diagram of an interaction procedure of a communication method 200 according to an embodiment of this application. As shown in FIG. 2, the method 200 includes at least S210 and S220. The following describes steps in the method 200.

S210. A network device sends first information to a terminal device, where the first information includes configuration information of an m^{th} HARQ process.

Correspondingly, the terminal device receives the first information sent by the network device.

S220. The terminal device determines, based on a quantity that is of time units of a downlink time domain resource and that is determined from the configuration information and/or based on an MCS index in the configuration information, whether the m^{th} HARQ process of M HARQ processes between the terminal device and the network device is enabled or disabled, where the m^{th} HARQ process is configured as a dynamically adjustable HARQ process, M is greater than or equal to m, and m is greater than or equal to 1.

S230. The terminal device performs communication based on a result of the determining.

As described above, at least one HARQ process, that is, the M HARQ processes, may be used between the network device and the terminal device, to provide feedback on downlink information. To dynamically adjust a HARQ process, in this embodiment of this application, the M HARQ processes include at least one dynamically adjustable HARQ process, and the m^{th} HARQ process is one of the at least one dynamically adjustable HARQ process.

The downlink time domain resource is a time domain resource occupied by the network device to send downlink information (the following second downlink information) to the terminal device. Different downlink information transmitted between the network device and the terminal device occupies different downlink time domain resources. When the m^{th} HARQ process is enabled, feedback is performed on the downlink information by using the m^{th} HARQ process. When the m^{th} HARQ process is disabled, feedback is not performed on the downlink information.

For ease of understanding, in this embodiment of this application, the configuration information of the m^{th} HARQ process in the first information is used as an example for description. It should be understood that the first information may further include configuration information of all or a part of the remaining dynamically adjustable HARQ processes in the M HARQ processes. When the first information further includes configuration information of a dynamically adjustable HARQ other than the m^{th} HARQ process, the terminal device determines, based on the configuration information of each HARQ process, whether the corresponding HARQ process is enabled or disabled. For a specific implementation, refer to the following description of the m^{th} HARQ process.

That the terminal device determines, based on the configuration information of the m^{th} HARQ process (unless otherwise specified, configuration information in the following examples is the configuration information of the m^{th} HARQ process), whether the m^{th} HARQ process is enabled or disabled may include at least the following several possible examples.

Example 1: The terminal device determines, based on the quantity that is of time units of the downlink time domain resource and that is determined from the configuration information, whether the m^{th} HARQ process is enabled or disabled.

It should be noted that the quantity N of time units of the downlink time domain resource may be determined based on a related time domain parameter of the downlink information, for example, a quantity N_{TB} of scheduled TBs (for example, a quantity of TBs of the second downlink information), a quantity Nᵣₑₚ of repetitions, or a quantity N_{sf} of unit resources (that is, a quantity of time units occupied by one repetition of one TB). For example, the quantity N of time units of the downlink time domain resource may meet the following formula (1): $N = {N}_{TB} ⋅ {N}_{rep} ⋅ {N}_{sf}$ (1)

At least one of the quantity N_{TB} of scheduled TBs, the quantity Nᵣₑₚ of repetitions, and the quantity N_{sf} of unit resources may be indicated by the configuration information. The configuration information may include at least one of DCI, a broadcast message, media access control control element (Media Access Control Control Element, MAC CE) signaling, and RRC signaling. Optionally, at least one of the quantity N_{TB} of scheduled TBs, the quantity Nᵣₑₚ of repetitions, and the quantity N_{sf} of unit resources may alternatively be defined in a protocol. This is not limited in this application.

In Example 1, the terminal device may determine, when the quantity of time units of the downlink time domain resource and a first threshold meet a first relationship, that the m^{th} HARQ process is disabled; or determine, when the quantity of time units of the downlink time domain resource and a first threshold do not meet a first relationship, that the m^{th} HARQ process is enabled.

In an embodiment, the first relationship may include that the quantity of time units of the downlink time domain resource is greater than or equal to the first threshold. To be specific, the terminal device determines, when the quantity of time units of the downlink time domain resource is greater than or equal to the first threshold, that the m^{th} HARQ process is disabled, or determines, when the quantity of time units of the downlink time domain resource is less than the first threshold, that the m^{th} HARQ process is enabled. It should be noted that there is a long delay in transmitting the second downlink information between the network device and the terminal device when there are a large quantity of time units of the downlink time domain resource occupied by the second downlink information. In this case, disabling the m^{th} HARQ process can reduce a communication delay between the network device and the terminal device.

In another embodiment, the first relationship may include that the quantity of time units of the downlink time domain resource is less than or equal to the first threshold. To be specific, the terminal device determines, when the quantity of time units of the downlink time domain resource is less than or equal to the first threshold, that the m^{th} HARQ process is disabled, or determines, when the quantity of time units of the downlink time domain resource is greater than the first threshold, that the m^{th} HARQ process is enabled. It should be noted that there is a long delay in transmitting the second downlink information between the network device and the terminal device when there are a large quantity of time units of the downlink time domain resource occupied by the second downlink information, that is, N has large impact on throughput performance of a communication system. In this case, there is relatively small impact, on the throughput performance of the communication system, of feedback of the second downlink information. Therefore, the m^{th} HARQ process does not need to be disabled. However, when there are a small quantity of time units of the downlink time domain resource occupied by the second downlink information, N has small impact on the throughput performance of the communication system. In this case, there is relatively large impact, on the throughput performance of the communication system, of feedback on the second downlink information. Therefore, the m^{th} HARQ process needs to be disabled.

Example 2: The terminal device determines, based on the MCS index in the configuration information, whether the m^{th} HARQ process is enabled or disabled.

The terminal device may determine, when the MCS index and a second threshold meet a second relationship, that the m^{th} HARQ process is disabled; or determine, when the MCS index and a second threshold do not meet a second relationship, that the m^{th} HARQ process is enabled.

In an implementation of Example 2, the second relationship includes that the MCS index is less than or equal to the second threshold. To be specific, the terminal device determines, when the MCS index indicated by the configuration information is less than or equal to the second threshold, that the m^{th} HARQ process is disabled, or determines, when the MCS index indicated by the configuration information is greater than the second threshold, that the m^{th} HARQ process is enabled. It should be noted that a smaller MCS index indicates a lower transmission rate of the second downlink information, that is, a smaller quantity of valid bits carried in an RE. Disabling the m^{th} HARQ process can reduce a communication delay between the network device and the terminal device, or improve throughput performance of a communication system.

In another implementation of Example 2, the second relationship includes that the MCS index is greater than or equal to the second threshold. To be specific, the terminal device determines, when the MCS index indicated by the configuration information is greater than or equal to the second threshold, that the m^{th} HARQ process is disabled, or determines, when the MCS index indicated by the configuration information is less than the second threshold, that the m^{th} HARQ process is enabled. It should be noted that a smaller MCS index indicates a lower transmission rate of the second downlink information, that is, a smaller quantity of valid bits carried in an RE, and transmission of the second downlink information has large impact on throughput performance of a communication system. In this case, compared with transmission of the second downlink information, there is relatively small impact, on the throughput performance of the communication system, of feedback on the second downlink information. Therefore, the m^{th} HARQ process does not need to be disabled. However, a larger MCS index indicates a higher transmission rate of the second downlink information. When the MCS index is greater than or equal to the second threshold, a rate requirement of the communication system can be met. In this case, compared with transmission of the second downlink information, there is relatively large impact, on the throughput performance of the communication system, of feedback on the second downlink information. Therefore, the HARQ process needs to be disabled.

Example 3: The terminal device determines, based on a TB size of the second downlink information, whether the m^{th} HARQ process is enabled or disabled. Optionally, the TB size of the second downlink information may be determined based on the MCS index and a resource unit (resource unit, RU) index. It should be noted that the RU index indicates a resource occupied by one TB. The TB size of the second downlink information may be uniquely determined based on the MCS index and the RU index in a preconfigured correspondence. In the correspondence, each MCS index corresponds to one TB size in one RU index.

The terminal device may determine, when the TB size of the second downlink information and a third threshold meet a third relationship, that the m^{th} HARQ process is disabled; or determine, when the TB size of the second downlink information and a third threshold do not meet a third relationship, that the m^{th} HARQ process is enabled.

In an implementation of Example 3, the third relationship includes that the TB size is greater than or equal to the third threshold. To be specific, the terminal device determines, when the TB size is greater than or equal to the third threshold, that the m^{th} HARQ process is disabled, or determines, when the TB size is less than the third threshold, that the m^{th} HARQ process is enabled. When the TB of the second downlink information is large, there is a long delay in transmitting the second downlink information between the network device and the terminal device. In this case, disabling the m^{th} HARQ process can reduce a communication delay between the network device and the terminal device.

In another implementation of Example 3, the third relationship may include that the TB size is less than or equal to the third threshold. To be specific, the terminal device determines, when the TB size is less than or equal to the third threshold, that the m^{th} HARQ process is disabled, or determines, when the TB size is greater than the first threshold, that the m^{th} HARQ process is enabled. It should be noted that there is a long delay in transmitting the second downlink information between the network device and the terminal device when the TB of the second downlink information is large, that is, N has large impact on throughput performance of a communication system. In this case, there is relatively small impact, on the throughput performance of the communication system, of feedback of the second downlink information. Therefore, the m^{th} HARQ process does not need to be disabled. However, when there are a small quantity of time units of the downlink time domain resource occupied by the second downlink information, N has small impact on the throughput performance of the communication system. In this case, there is relatively large impact, on the throughput performance of the communication system, of feedback on the second downlink information. Therefore, the m^{th} HARQ process needs to be disabled.

Example 4: The terminal device determines, based on at least two of the quantity that is of time units of the downlink time domain resource and that is determined from the configuration information, the MCS index in the configuration information, and a TB size, whether the m^{th} HARQ process is enabled or disabled.

For example, the terminal device may comprehensively determine, with reference to the quantity N of time units of the downlink time domain resource and the MCS index, whether the m^{th} HARQ process is enabled or disabled, to improve accurate control over enabling or disabling the HARQ process.

For example, the terminal device may determine, when the quantity of time units of the downlink time domain resource and a first threshold meet a first relationship, and the MCS index in the configuration information and a second threshold meet a second relationship, that the m^{th} HARQ process is disabled; or determine, when the quantity of time units of the downlink time domain resource and a first threshold do not meet a first relationship, or the MCS index in the configuration information and a second threshold do not meet a second relationship, that the m^{th} HARQ process is enabled.

For example, the terminal device determines, when the quantity of time units of the downlink time domain resource is greater than or equal to the first threshold and the MCS index is less than or equal to the second threshold, that the m^{th} HARQ process is disabled; or determines, when the quantity of time units of the downlink time domain resource is less than the first threshold or the MCS index is greater than the second threshold, that the m^{th} HARQ process is enabled. For another example, the terminal device determines, when the quantity of time units of the downlink time domain resource is less than or equal to the first threshold and the MCS index is greater than or equal to the second threshold, that the m^{th} HARQ process is disabled; or determines, when the quantity of time units of the downlink time domain resource is greater than the first threshold or the MCS index is less than the second threshold, that the m^{th} HARQ process is enabled.

That the terminal device determines, with reference to the MCS index and the quantity N of time units of the downlink time domain resource, whether the HARQ process is enabled or disabled includes the following possible examples:
The MCS index is greater than or equal to the second threshold, and N is greater than or equal to the first threshold. Because transmission duration of the second downlink information is long, the HARQ needs to be disabled to reduce a delay.
The MCS index is greater than or equal to the second threshold, and N is less than the first threshold. In a scenario with a high throughput requirement, the HARQ needs to be disabled to further improve throughput performance.
The MCS index is less than the second threshold, and N is greater than the first threshold. Throughput performance is low, and the HARQ needs to be disabled to improve the throughput performance.
The MCS index is less than the second threshold, and N is less than the first threshold. By disabling the HARQ, throughput performance is significantly improved.

That the terminal device determines, with reference to the TB size and the quantity N of time units of the downlink time domain resource, whether the HARQ process is enabled or disabled includes the following possible examples:
The TB size is greater than or equal to the third threshold, and N is greater than or equal to the first threshold. Because transmission duration of the second downlink information is long, the HARQ needs to be disabled to reduce a delay.
The TB size is greater than or equal to the third threshold, and N is less than the first threshold. In a scenario with a high throughput requirement, the HARQ needs to be disabled to further improve throughput performance.
The TB size is less than the third threshold, and N is greater than the first threshold. Throughput performance is low, and the HARQ needs to be disabled to improve the throughput performance.
The TB size is less than the third threshold, and N is less than the first threshold. By disabling the HARQ, throughput performance is significantly improved.

That the terminal device determines, with reference to the MCS index and the TB size, whether the HARQ process is enabled or disabled includes the following possible examples:
The MCS index is greater than or equal to the second threshold, and the TB size is greater than or equal to the third threshold. Because transmission duration of the second downlink information is long, the HARQ needs to be disabled to reduce a delay.
The MCS index is greater than or equal to the second threshold, and the TB size is less than the third threshold. In a scenario with a high throughput requirement, the HARQ needs to be disabled to further improve throughput performance.
The MCS index is less than the second threshold, and the TB size is greater than the third threshold. Throughput performance is low, and the HARQ needs to be disabled to improve the throughput performance.
The MCS index is less than the second threshold, and the TB size is less than the third threshold. By disabling the HARQ, throughput performance is significantly improved.

That the terminal device determines, with reference to the MCS index, N, and the TB size, whether the HARQ process is enabled or disabled includes the following possible examples:
When the MCS is greater than or equal to the second threshold, N is greater than or equal to the first threshold, and the TB size is greater than or equal to the third threshold, the HARQ process is disabled to reduce a delay.
When the MCS is greater than or equal to the second threshold, N is less than the first threshold, and the TB size is greater than or equal to the third threshold, the HARQ process may be disabled to further improve a throughput in a scenario with a high throughput requirement.
When the MCS is greater than or equal to the second threshold, N is less than the first threshold, and the TB size is less than the third threshold, a channel condition is good, indicating that a decoding accuracy rate is high and disabling the HARQ process does not affect reliability.
When the MCS is greater than or equal to the second threshold, N is greater than or equal to the first threshold, and the TB size is less than the third threshold, a channel condition is poor, indicating that a decoding accuracy rate is low and enabling is required to improve reliability.
When the MCS is less than the second threshold, N is greater than or equal to the first threshold, and the TB size is greater than or equal to the third threshold, a channel condition is poor, and to meet a throughput requirement, the HARQ process is disabled to improve throughput performance.
When the MCS is less than the second threshold, N is less than the first threshold, and the TB size is greater than or equal to the third threshold, a channel condition is good, a throughput requirement is low, but a reliability requirement is high, and the HARQ process may be disabled.
When the MCS is less than the second threshold, N is less than the first threshold, and the TB size is less than the third threshold, disabling the HARQ process can greatly improve throughput performance.
When the MCS is less than the second threshold, N is greater than or equal to the first threshold, and the TB size is less than the third threshold, a channel condition is poor, throughput performance is low, and disabling the HARQ process can reduce a transmission delay.

In Example 1 and Example 4, the first threshold is used to distinguish impact of a size N of a time domain resource occupied for transmission of downlink information on the throughput performance of the system. When N is greater than the first threshold, it indicates that transmission of the downlink information has large impact on the throughput performance of the communication system. When N is less than the first threshold, it indicates that transmission of the downlink information has small impact on the throughput performance of the communication system. The first threshold may be related to a first parameter. The first parameter includes at least one of the following:
1. Communication delay between the terminal device and the network device, for example, a round trip delay (round trip delay, RTD) between the terminal device and the network device, a common timing advance (common timing advance, Common TA), or another delay-related parameter. Optionally, a longer communication delay between the terminal device and the network device indicates smaller impact of the size of the time domain resource occupied for transmission of the downlink information on the throughput performance of the communication system. In this case, the first threshold is larger.
2. Communication distance between the terminal device and the network device. Generally, a longer communication distance between the terminal device and the network device indicates a longer communication delay. Therefore, similarly, a longer communication distance between the terminal device and the network device indicates smaller impact of the size of the time domain resource occupied for transmission of the downlink information on the throughput performance of the communication system. In this case, the first threshold is larger.
   However, it should be understood that the communication delay is not only related to a communication distance, but also related to, for example, communication quality of a communication link.
3. Type of the network device. When types of network devices are different, communication distances between the terminal device and the network devices are different, and satellites such as a GEO, a MEO, and a LEO (including a LEO 1200, a LEO 600, ..., or the like) have different orbital altitudes. Alternatively, when types of network devices are different, communication delays between the terminal device and the network devices are different. For example, different network devices have different communication capabilities, and quality of established communication connections is different. As a result, the communication delays between the terminal device and the network devices are different.

For example, when the network device is a GEO, the first threshold is 64; when the network device is a LEO 1200, the first threshold is 16; and when the network device is a LEO 600, the first threshold is 8.

In Example 1 and Example 4, the first threshold may be related to the quantity M of HARQ processes between the terminal device and the network device. For example, larger M indicates a shorter communication delay between the terminal device and the network device and larger impact of the size of the time domain resource occupied for transmission of the downlink information on the throughput performance of the communication system. In this case, the first threshold is smaller. Optionally, in a LEO 1200 scenario, when M=1, the first threshold is 16, and when M=2, the first threshold is 8; and in a LEO 600 scenario, when M=1, the first threshold is 8, and when M=2, the first threshold is 4.

Optionally, the network device sends threshold configuration information to the terminal device, to configure the first threshold. The threshold configuration information may directly indicate the first threshold, or the threshold configuration information may indicate at least one of a type of the network device, a communication delay between the terminal device and the network device, or a communication distance between the terminal device and the network device. Certainly, this is not limited in this application. For example, the first threshold may be defined in a protocol. For another example, the first threshold may be determined by the terminal device based on the quantity M of HARQ processes of the terminal device.

In Example 2 and Example 4, it should be noted that a larger MCS index of the downlink information indicates a larger quantity of valid bits that can be carried in a resource element, and a shorter delay in transmitting the downlink information. The second threshold is used to distinguish impact of a transmission rate of downlink information on the throughput performance of the communication system. When the MCS is greater than the second threshold, it indicates that the transmission rate of the downlink information is high and has small impact on the throughput performance of the communication system. When the MCS is less than the second threshold, it indicates that the transmission rate of the downlink information is low and has large impact on the throughput performance of the communication system. The second threshold may be related to the first parameter. For the first parameter, refer to the foregoing examples.

Optionally, a longer communication delay between the terminal device and the network device indicates smaller impact of a transmission rate of downlink information on the throughput performance of the communication system. In this case, the second threshold is smaller.

Optionally, a longer communication distance between the terminal device and the network device indicates a longer communication delay. Therefore, similarly, a longer communication distance between the terminal device and the network device indicates a smaller second threshold.

In Example 2 and Example 4, the second threshold may be related to the quantity M of HARQ processes between the terminal device and the network device. For example, larger M indicates a shorter communication delay between the terminal device and the network device and larger impact of a transmission rate of downlink information on the throughput performance of the communication system. In this case, the first threshold is larger.

Optionally, the network device sends threshold configuration information to the terminal device, to configure the second threshold. The threshold configuration information may directly indicate the second threshold, or the threshold configuration information may indicate at least one of a type of the network device, a communication delay between the terminal device and the network device, or a communication distance between the terminal device and the network device. Certainly, this is not limited in this application. For example, the second threshold may be defined in a protocol. For another example, the second threshold may be determined by the terminal device based on the quantity M of HARQ processes of the terminal device.

In Example 3 and Example 4, the third threshold is used to distinguish impact of the TB size of transmission of the downlink information on the throughput performance of the system. When the TB size is greater than the first threshold, it indicates that transmission of the downlink information has large impact on the throughput performance of the communication system. When the TB size is less than the first threshold, it indicates that transmission of the downlink information has small impact on the throughput performance of the communication system. The first threshold may be related to the first parameter. For the first parameter, refer to the foregoing examples.

Optionally, a longer communication delay between the terminal device and the network device indicates smaller impact of the TB size of the second downlink information on the throughput performance of the communication system. In this case, the first threshold is larger.

Optionally, a longer communication distance between the terminal device and the network device indicates a longer communication delay. Therefore, a longer communication distance between the terminal device and the network device indicates smaller impact of the TB size of the second downlink information on the throughput performance of the communication system. In this case, the first threshold is larger.

In Example 3 and Example 4, the third threshold may be related to the quantity M of HARQ processes between the terminal device and the network device. For example, larger M indicates a shorter communication delay between the terminal device and the network device and larger impact of a size of a time domain resource occupied for transmission of downlink information on the throughput performance of the communication system. In this case, the first threshold is smaller.

Optionally, the network device sends threshold configuration information to the terminal device, to configure the third threshold. The threshold configuration information may directly indicate the third threshold, or the threshold configuration information may indicate at least one of a type of the network device, a communication delay between the terminal device and the network device, or a communication distance between the terminal device and the network device. Certainly, this is not limited in this application. For example, the third threshold may be defined in a protocol. For another example, the third threshold may be determined by the terminal device based on the quantity M of HARQ processes of the terminal device.

In Example 4, the threshold configuration information sent by the network device to the terminal device may include at least two of the configuration information of the first threshold, the configuration information of the second threshold, and the configuration information of the third threshold. For a configuration manner, refer to the configuration manners of the first threshold and the second threshold. Details are not described herein again.

In Example 1, Example 2, Example 3, and Example 4, the network device dynamically adjusts the HARQ process by using any downlink signaling that can implement flexible scheduling, for example, at least one of DCI, a broadcast message, MAC CE signaling, and RRC signaling, to improve flexibility of scheduling the HARQ process, and reduce a scheduling delay.

In some embodiments, the terminal device needs to be configured by the network device to allow the terminal device to dynamically adjust the HARQ process. For example, the network device sends first indication information to the terminal device, where the first indication information indicates that the terminal device is allowed to adjust the dynamically adjustable HARQ process.

Optionally, the network device may send the first indication information before sending the first information, or the network device may send the first indication information after sending the first information. When the network device sends the first indication information after sending the first information, the first indication information may be understood as activation of a dynamic adjustment function for the HARQ process. In other words, only after receiving the first indication information, the terminal device can determine, based on the configuration information of the m^{th} HARQ process, whether the m^{th} HARQ process is enabled or disabled.

To further improve reliability of dynamically adjusting the HARQ process, the terminal device needs to send capability information to the network device, where the capability information indicates that the terminal device has a capability of adjusting the dynamically adjustable HARQ process. Then, the network device sends the first indication information to the terminal device to indicate that the terminal device is allowed to adjust the dynamically adjustable HARQ process.

In some embodiments, when the m^{th} HARQ is enabled, a first bit in the configuration information may indicate a feedback resource and/or a feedback parameter of feedback information sent based on the m^{th} HARQ process. In some other embodiments, when the m^{th} HARQ is disabled, a first bit in the configuration information may indicate to perform data transmission enhancement on the m^{th} HARQ process. For example, the first bit indicates a larger quantity of repetitions and/or more aggregation levels, or the first bit indicates a parameter related to a performance improvement technology such as a quantity of repetitions, an aggregation level, diversity, antenna selection, precoding, or polarization multiplexing. When the m^{th} HARQ is disabled, the first bit is reused, to implement data transmission enhancement.

For example, the configuration information is DCI. In a narrow band internet of things (Narrow Band Internet of Things, NB-IoT) communication scenario, an indicator field of the first bit may include but is not limited to at least one of the following:
(1) HARQ-ACK resource (resource) field: It has a size of 4 bits, and indicates a start point of a time domain resource of an ACK/NACK relative to a narrowband physical downlink shared channel (Narrowband physical downlink shared channel, NPDSCH). To be specific, if the NPDSCH starts to be received from an n^{th} subframe, a corresponding ACK/NACK starts to be fed back from an (n+k)^{th} subframe. Therefore, when no ACK/NACK is fed back, the field may indicate data transmission enhancement.
(2) Modulation and coding scheme field: This field indicates a size of a TB to be selected or whether a 16QAM modulation scheme is used. For example, when the field is 1111 (a size is 4 bits), it indicates that the 16QAM modulation scheme is used; otherwise, a QPSK modulation scheme is used, and different values (0 to 13) and other parameters in DCI determine a size of a TB. One or more bits of the field may be reused. For example, the last one or two bits of the field indicate data transmission enhancement when the HARQ process is disabled, and the first one or two bits are used for indication according to an existing standard.
(3) New data indicator field: It has a size of 1 bit. The field indicates whether scheduled data is new data or retransmitted data. When the HRAQ process is disabled, new data is scheduled each time. Therefore, this field may indicate data transmission enhancement.

For example, the configuration information is DCI. In an NR communication scenario, the first bit indicates at least one of the following:
(4) Indicator (PDSCH-to-HARQ_feedback timing indicator) representing timing between a physical downlink shared channel (Physical Downlink Shared Channel, PDSCH) and a HARQ: It performs indication by using three bits. For example, a PDSCH starts to be received from an n^{th} slot, and an ACK/NACK feedback starts to be fed back from n+k. When the HRAQ process is disabled, the three bits may indicate data transmission enhancement.
(5) Power control parameter of a physical uplink control channel (physical uplink control channel, PUCCH) for carrying an ACK/NACK: It performs indication by using two bits. When the HRAQ process is disabled, the two bits may indicate data transmission enhancement.
(6) Parameter related to resource allocation of a PUCCH carrying an ACK/NACK: It performs indication by using three bits. When the HRAQ process is disabled, the three bits may indicate data transmission enhancement.

For example, the configuration information is DCI. Regardless of whether in an NB-IoT communication scenario or an NR communication scenario, the first bit further includes:
(7) Bit indicating a modulation order: In a satellite communication scenario, a high-order modulation scheme is usually not used, that is, several highest MCS indexes do not need to be supported in the satellite communication scenario. Therefore, each field indicating a modulation order in the DCI may be appropriately enhanced. For example, x highest bits or X lowest bits of the field indicate a coverage enhancement parameter, and the remaining bits indicate different MCS indexes starting from 0.

In some embodiments, after receiving the configuration information of the m^{th} HARQ process sent by the network device, the terminal device may determine, after an interval, whether the m^{th} HARQ process is enabled or disabled. The interval may be related to a data processing delay of the terminal device. For example, the terminal device determines, based on the configuration information, time required for enabling or disabling the m^{th} HARQ process. Alternatively, the interval may be preset, for example, defined in a protocol or preconfigured by the network device.

In some embodiments, before receiving the first information sent by the network device, the terminal device may send a status adjustment request to the network device, where the status adjustment request is used to request that the m^{th} HARQ process is enabled or disabled. The network device sends the first information to the terminal device in response to the request, and then the terminal device may determine, based on the configuration information of the m^{th} HARQ process in the first information, whether the m^{th} HARQ process is enabled or disabled; or the network device sends a status adjustment response to the terminal device in response to the request, where the status adjustment response is used to confirm that the request of the terminal device succeeds or the request of the terminal device fails, and the terminal device may determine, when confirming that the request succeeds, that a state whether the m^{th} HARQ process is enabled or disabled is consistent with a requested HARQ process state.

In some embodiments, the m^{th} HARQ process is dynamically adjusted based on any one of the foregoing embodiments. For example, when being adjusted from being enabled to being disabled or adjusted from being disabled to being enabled, the m^{th} HARQ process may be further restored to an initial state, and the initial state may be a state before the dynamic adjustment. For example, after completing the feedback of the second downlink information, the terminal device determines that the m^{th} HARQ process is restored to the initial state. For another example, the terminal device receives second indication information sent by the network device, where the second indication information indicates to stop adjusting the m^{th} HARQ process, and the second indication information may be for deactivating a dynamic adjustment function of a HARQ process. In this case, the terminal device determines that the m^{th} HARQ process is restored to the initial state. For another example, when a preset valid time period for dynamic adjustment ends, the terminal device determines that the m^{th} HARQ process is restored to the initial state. The valid time period may be defined in a protocol or preconfigured by the network device.

The initial state of the HARQ process may be a default state. For example, the HARQ process is enabled by default in an NR system. Alternatively, the initial state of the HARQ process may be preconfigured. For example, the network device configures, by using RRC signaling, the initial state of the m^{th} HARQ process to be enabled. Alternatively, the initial state of the HARQ process may be a state after a previous dynamic adjustment.

In some embodiments, the method 200 may further include:
S240. The network device sends the second downlink information to the terminal device on the downlink time domain resource. Correspondingly, the terminal device receives the second downlink information from the network device on the downlink time domain resource.

It should be understood that a sequence of performing S240 and S220 is not limited in this application.

It should be noted that in S230, when the m^{th} HARQ process is disabled, the terminal device does not provide feedback on the second downlink information, and when the m^{th} HARQ process is disabled, the network device may continue to send next downlink information without a need of waiting for feedback information of the second downlink information.

In S230, when the m^{th} HARQ process is enabled, the terminal device performs feedback on the second downlink information or sends feedback information of the second downlink information, as shown in S231 in FIG. 2. Correspondingly, when the m^{th} HARQ process is enabled, the network device needs to wait for the feedback information of the second downlink information.

In some embodiments, the M HARQ processes may further include at least one non-dynamically adjustable HARQ process. The non-dynamically adjustable HARQ process may be enabled by default, and is used to provide feedback on information having a high transmission reliability requirement. For example, two HARQ processes including one non-dynamically adjustable HARQ process that is enabled by default and one dynamically adjustable HARQ process are used between the terminal device and the network device. When the dynamically adjustable HARQ process is disabled, the terminal device may perform, by using the non-dynamically adjustable HARQ process that is enabled by default, feedback on information having a high transmission reliability requirement, and does not perform, based on a disabled state of the dynamically adjustable HARQ process, feedback on other information having a low reliability requirement. When the dynamically adjustable HARQ process is enabled, the terminal device may perform, by using either HARQ process, feedback on information having a high transmission reliability requirement, for example, perform, by using an idle HARQ in the two HARQs, feedback on the information having a high transmission reliability requirement.

Data having a high transmission reliability requirement may include, for example, service data such as a pre-warning or a notification. For example, data having a high transmission reliability requirement may be carried in a specific data bearer channel, for example, carried in a MAC CE. The terminal device may determine, based on a data bearer channel of downlink information, whether feedback needs to be performed by using an enabled HARQ process.

The first information may include configuration information of a plurality of HARQ processes, and different HARQ processes correspond to different downlink information (for example, TBs), but may be scheduled by using a same piece of downlink control information. Based on any one of the foregoing examples, the terminal device does not determine, for configurations of HARQ processes, whether feedback needs to be performed on downlink information, but determines, based on a configuration of one of the HARQ processes, whether feedback needs to be performed on all downlink information. In some embodiments, if feedback needs to be performed on some downlink information, and feedback does not need to be performed on some other downlink information, the terminal device may determine, based on configuration information of a HARQ process corresponding to an i^{th} piece of downlink information, that all HARQ processes corresponding to all downlink information are disabled or all HARQ processes corresponding to all downlink information are enabled, where the i^{th} piece of downlink information is any one of a plurality of pieces of downlink information scheduled by using a same piece of downlink control information. For example, according to the first piece of downlink information (TB), it is determined that a HARQ process corresponding to each piece of downlink information is disabled or enabled; according to the second piece of downlink information (TB), it is determined that a HARQ process corresponding to each piece of downlink information is disabled or enabled; or according to the last piece of downlink information (TB), it is determined that a HARQ process corresponding to each piece of downlink information is disabled or enabled. It may be understood that, when whether feedback is required is determined based on the i^{th} piece of downlink information, the network device sends, when a HARQ of each piece of downlink information needs to be configured to be enabled, downlink information to which feedback needs to be performed based on the configuration of the HARQ process as the i^{th} piece of downlink information of the plurality of pieces of downlink information scheduled by using a same piece of downlink control information. Similarly, the network device sends, when a HARQ of each piece of downlink information needs to be configured to be disabled, downlink information to which feedback does not need to be performed based on the configuration of the HARQ process as the i^{th} piece of downlink information of the plurality of pieces of downlink information scheduled by using a same piece of same downlink control information.

It should be understood that the network device also needs to determine, based on the quantity of time units of the downlink time domain resource and/or the MCS index, whether the m^{th} HARQ process is enabled or disabled. Then, when determining that the m^{th} HARQ process is enabled, the network device may wait for the terminal device to send the feedback information of the second downlink information; or when determining that the m^{th} HARQ process is disabled, the network device may continue to send next downlink information without a need of waiting for the feedback information of the second downlink information.

An implementation in which the network device determines whether the m^{th} HARQ process is enabled or disabled is the same as or similar to the implementation of the terminal device in the foregoing embodiment. Details are not described herein again. Optionally, the network device may determine a transmission parameter of the m^{th} HARQ process, that is, a quantity of time units of a downlink time domain resource and/or an MCS index of the m^{th} HARQ.

It should be further understood that a sequence of a process in which the network device determines whether the m^{th} HARQ process is enabled or disabled and a process in which the network device sends the first information is not limited in this embodiment of this application.

Therefore, in this embodiment of this application, the terminal device and the network device determine, based on the quantity of time units of the downlink time domain resource and/or the MCS index, whether the HARQ process between the terminal device and the network device is enabled or disabled, to avoid always dynamically adjusting the HARQ process based on RRC signaling, improve flexibility of scheduling the HARQ process, and reduce a scheduling delay.

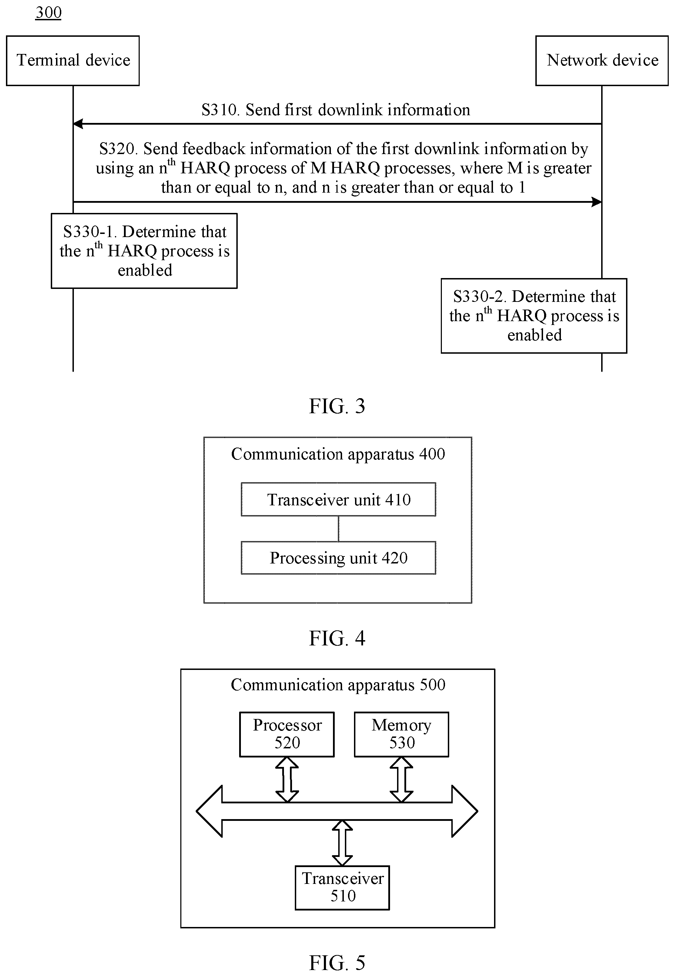

In some embodiments, the terminal device may provide feedback on the first downlink information by using one of the M HARQ processes. The first downlink information is downlink information that has a feedback requirement, and may include, for example, the foregoing data having a high transmission reliability requirement. For the first downlink information, refer to the foregoing embodiment. Details are not described again. The following describes an embodiment of this application with reference to FIG. 3.

FIG. 3 is a schematic diagram of an interaction procedure of a communication method 300 according to an embodiment of this application. With reference to FIG. 3, the method 300 includes the following steps.

S310. A network device sends first downlink information to a terminal device.

Correspondingly, the terminal device receives the first downlink information sent by the network device.

S320. The terminal device sends feedback information of the first downlink information by using an n^{th} HARQ process of M HARQ processes, where M is greater than or equal to n, and n is greater than or equal to 1.

Correspondingly, the network device receives the feedback information of the first downlink information sent by the terminal device by using the n^{th} HARQ process.

S330-1. The terminal device determines that the n^{th} HARQ process is enabled. S330-2. The network device determines that the n^{th} HARQ process is enabled.

It should be noted that the M HARQ processes between the terminal device and the network device include at least one dynamically adjustable HARQ process. The n^{th} HARQ process may be any one of the M HARQ processes, for example, a dynamically adjustable HARQ process or a non-dynamically adjustable HARQ process.

For example, when M is equal to 1, a dynamically adjustable HARQ process is used between the terminal device and the network device. After receiving the first downlink information, the terminal device may provide feedback on the first downlink information by using HARQ information. In this case, it is determined that the HARQ process is enabled. For example, when an initial state of the HARQ process is process-disabled, the initial state is adjusted to process-enabled; or when an initial state of the HARQ process is process-enabled, a process-enabled state is maintained.

When M is greater than 1 (for example, M is equal to 2), one dynamically adjustable HARQ and one non-dynamically adjustable HARQ are used between the terminal device and the network device.

When the non-dynamically adjustable HARQ process is enabled, the n^{th} HARQ process may be the non-dynamically adjustable HARQ process. In addition, feedback is performed on other downlink information when the dynamically adjustable HARQ process is enabled, and feedback is not performed when the process is disabled. Certainly, in this embodiment of this application, the terminal device is not limited to performing feedback by using an enabled non-dynamically adjustable HARQ process. For example, the terminal device may alternatively provide feedback on the first downlink information by enabling a dynamically adjustable HARQ process and by using the dynamically adjustable HARQ process. A network side determines whether the terminal device performs feedback by using an enabled non-dynamically adjustable HARQ process or performs feedback based on a dynamically adjustable HARQ process.

When the non-dynamically adjustable HARQ process is disabled, the n^{th} HARQ process may be a dynamically adjustable HARQ process. For example, the terminal device may provide feedback on the first downlink information by enabling a dynamically adjustable HARQ process and by using the dynamically adjustable HARQ process.

When the non-dynamically adjustable HARQ process is disabled, the n^{th} HARQ process may be a HARQ process determined by the network side. For example, the network device selects an idle HARQ process from two HARQ processes for feedback. In addition, the terminal device may provide feedback on the first downlink information by using the n^{th} HARQ process without adjusting a state of the n^{th} HARQ process. For example, when the n^{th} HARQ process is a non-dynamically adjustable HARQ process, the HARQ process is still in a process-disabled state for feedback of any other downlink information.

The initial state may be a default state, for example, enabled by default or disabled by default; or a state of the HARQ process may be preconfigured, for example, an enabled state or a disabled state configured by the network device based on RRC signaling; or a state of the HARQ process may be an enabled state or a disabled state after a previous dynamic adjustment.

In some embodiments, if the n^{th} HARQ process is a dynamically adjustable process, the n^{th} HARQ process is dynamically adjusted based on any one of the foregoing embodiments. For example, when being adjusted from being enabled to being disabled or adjusted from being disabled to being enabled, the n^{th} HARQ process may be further restored to an initial state. For example, after completing the feedback of the first downlink information, the terminal device determines that the n^{th} HARQ process is restored to the initial state. For another example, the terminal device receives second indication information sent by the network device, where the second indication information indicates to stop adjusting the n^{th} HARQ process. In this case, the terminal device determines that the n^{th} HARQ process is restored to the initial state. For another example, when a preset valid time period for dynamic adjustment ends, the terminal device determines that the n^{th} HARQ process is restored to the initial state. The valid time period may be defined in a protocol or preconfigured by the network device.

It should be understood that an implementation in which the network device determines whether the n^{th} HARQ process is enabled or disabled is similar to that of the terminal device. Details are not described herein again.

It should be further understood that a sequence of performing S330-1 and S330-2 is not limited in this application. The terminal device may determine, in a process of sending the feedback information of the first downlink information, that the n^{th} HARQ process is enabled, and the network device may determine, in a process of receiving the feedback information of the first downlink information, that the n^{th} HARQ process is enabled. Certainly, in some embodiments, that the terminal device performs feedback on the first downlink information by using the n^{th} HARQ process does not mean that the n^{th} HARQ process is enabled. In this case, the n^{th} HARQ process remains in the initial state, so that feedback is performed or not performed on downlink information other than the first downlink information based on the initial state.

Therefore, in this embodiment of this application, feedback is performed, by using one of the M HARQ processes, to the first downlink information that has a feedback requirement, to ensure that feedback is performed on the first downlink information that has a feedback requirement, and improve communication reliability and flexibly schedule the HARQ process.

FIG. 4 is a schematic block diagram of an apparatus according to an embodiment of this application. As shown in FIG. 4, the apparatus 400 may include a transceiver unit 410 and a processing unit 420.

Optionally, the communication apparatus 400 may correspond to the terminal device in the foregoing method embodiments, for example, may be the terminal device, or a component (for example, a chip or a chip system) configured in the terminal device.

It should be understood that the units in the communication apparatus 400 are separately configured to implement corresponding procedures of the methods in the foregoing embodiments.

When the communication apparatus 400 is configured to implement the method 200 shown in FIG. 2, the transceiver unit 410 may be configured to receive first information sent by a network device, where the first information includes configuration information of an m^{th} hybrid automatic repeat request HARQ process; and the processing unit 420 may be configured to determine, based on a quantity that is of time units of a downlink time domain resource and that is determined from the configuration information and/or based on an MCS index in the configuration information, whether the m^{th} HARQ process of M HARQ processes between the communication apparatus and the network device is enabled or disabled, where the m^{th} HARQ process is configured as a dynamically adjustable HARQ process; and M is greater than or equal to m, and m is greater than or equal to 1.

When the communication apparatus 400 is configured to implement the method 300 shown in FIG. 3, the transceiver unit 410 may be configured to receive first downlink information sent by a network device, where the first downlink information is downlink information that has a feedback requirement; and the transceiver unit 410 is further configured to send feedback information of the first downlink information by using an n^{th} HARQ process of M HARQ processes, where the M HARQ processes include at least one dynamically adjustable HARQ process, M is greater than or equal to n, and n is greater than or equal to 1; and the processing unit 420 may be configured to determine that the n^{th} HARQ process is enabled.

It should be understood that a specific process in which the units perform the foregoing corresponding steps is described in detail in the foregoing method embodiments, and for brevity, details are not described herein.

Optionally, the communication apparatus 400 may correspond to the network device in the foregoing method embodiments, for example, may be the network device, or a component (for example, a chip or a chip system) configured in the network device.

It should be understood that the modules in the communication apparatus 400 are separately configured to implement corresponding procedures of the methods in the foregoing embodiments.

The processing unit 420 may be configured to determine a transmission parameter of an m^{th} HARQ process, where the transmission parameter includes a quantity of time units of a downlink time domain resource and/or an MCS index; the processing unit 420 is further configured to determine, based on the transmission parameter, whether the m^{th} HARQ process of M HARQ processes between a terminal device and the communication apparatus is enabled or disabled, where the m^{th} HARQ process is configured as a dynamically adjustable HARQ process; M is greater than or equal to m, and m is greater than or equal to 1.

Alternatively, the transceiver unit 410 may be configured to send first downlink information to a terminal device, where the first downlink information is downlink information that has a feedback requirement; and the transceiver unit 410 is further configured to receive feedback information of the first downlink information sent by the terminal device by using an n^{th} HARQ process of M HARQ processes, where the M HARQ processes include at least one dynamically adjustable HARQ process, M is greater than or equal to n, and n is greater than or equal to 1; and a processing unit, configured to determine that the n^{th} HARQ process is enabled.

It should be understood that a specific process in which the units perform the foregoing corresponding steps is described in detail in the foregoing method embodiments, and for brevity, details are not described herein.

When the apparatus 400 is a terminal device or a network device, the transceiver unit 410 in the apparatus 400 may be implemented by using a transceiver, for example, may correspond to the transceiver 510 in the apparatus 500 shown in FIG. 5. The processing unit 420 in the apparatus 400 may be implemented by using at least one processor, for example, may correspond to the processor 520 in the apparatus 500 shown in FIG. 5.

When the apparatus 400 is a chip or a chip system configured in a communication device (for example, a terminal device or a network device), the transceiver unit 410 in the communication apparatus 400 may be implemented by using an input/output interface, a circuit, or the like, and the processing unit 420 in the apparatus 400 may be implemented by using a processor, a microprocessor, an integrated circuit, or the like integrated in the chip or the chip system.

FIG. 5 is another schematic block diagram of an apparatus according to an embodiment of this application. As shown in FIG. 5, the apparatus 500 may include a transceiver 510, a processor 520, and a memory 530. The transceiver 510, the processor 520, and the memory 530 communicate with each other by using an internal connection path. The memory 530 is configured to store instructions. The processor 520 is configured to execute the instructions stored in the memory 530, to control the transceiver 510 to send a signal and/or receive a signal.

It should be understood that the apparatus 500 may correspond to the terminal device or the network device in the foregoing method embodiments, and may be configured to perform steps and/or procedures performed by the terminal device or the network device in the foregoing method embodiments. Optionally, the memory 530 may include a read-only memory and a random access memory, and provide instructions and data for the processor. A part of the memory may further include a non-volatile random access memory. The memory 530 may be an independent device, or may be integrated in the processor 520. The processor 520 may be configured to execute the instructions stored in the memory 530. In addition, when the processor 520 executes the instructions stored in the memory, the processor 520 is configured to perform the steps and/or procedures corresponding to the terminal device or the network device in the foregoing method embodiments.

Optionally, the apparatus 500 is the terminal device in the foregoing embodiments.

Optionally, the apparatus 500 is the network device in the foregoing embodiments.

The transceiver 510 may include a transmitter and a receiver. The transceiver 510 may further include one or more antennas. The processor 520, the memory 530, and the transceiver 510 may be devices integrated in different chips. For example, the processor 520 and the memory 530 may be integrated in a baseband chip, and the transceiver 510 may be integrated in a radio frequency chip. The processor 520, the memory 530, and the transceiver 510 may alternatively be devices integrated in a same chip. This is not limited in this application.

Optionally, the apparatus 500 is a component configured in the terminal device, for example, a chip or a chip system.

Optionally, the apparatus 500 is a component configured in the network device, for example, a chip or a chip system.

The transceiver 520 may alternatively be a communication interface, for example, an input/output interface or a circuit. The transceiver 520, the processor 510, and the memory 530 may all be integrated in a same chip, for example, integrated in a baseband chip.

This application further provides a processing apparatus, including at least one processor. The at least one processor is configured to execute a computer program stored in a memory, to enable the processing apparatus to perform the method performed by the terminal device or the network device in the foregoing method embodiments.

An embodiment of this application further provides a processing apparatus, including a processor and an input/output interface. The input/output interface is coupled to the processor. The input/output interface is configured to input and/or output information. The information includes at least one of instructions and data. The processor is configured to execute a computer program, to enable the processing apparatus to perform the method performed by the terminal device or the network device in the foregoing method embodiments.

An embodiment of this application further provides a processing apparatus, including a processor and a memory. The memory is configured to store a computer program, and the processor is configured to invoke the computer program from the memory and run the computer program, to enable the processing apparatus to perform the method performed by the terminal device or the network device in the foregoing method embodiments.

It should be understood that the processing apparatus may be one or more chips. For example, the processing apparatus may be a field programmable gate array (field programmable gate array, FPGA), an application-specific integrated chip (application-specific integrated circuit, ASIC), a system on chip (system on chip, SoC), a central processing unit (central processing unit, CPU), a network processor (network processor, NP), a digital signal processing circuit (digital signal processor, DSP), a microcontroller (micro controller unit, MCU), a programmable controller (programmable logic device, PLD), or another integrated chip.

In an implementation process, steps in the foregoing methods can be implemented by using a hardware integrated logical circuit in the processor, or by using instructions in a form of software. The steps of the method disclosed with reference to embodiments of this application may be directly performed by a hardware processor, or may be performed by using a combination of hardware in the processor and a software module. A software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor. To avoid repetition, details are not described herein again.

It should be noted that, the processor in embodiments of this application may be an integrated circuit chip, and has a signal processing capability. In an implementation process, steps in the foregoing method embodiments can be implemented by using a hardware integrated logical circuit in the processor, or by using instructions in a form of software. The processor may be a general-purpose processor, a digital signal processor (DSP), an application-specific integrated circuit (ASIC), a field programmable gate array (FPGA) or another programmable logic device, a discrete gate or a transistor logic device, or a discrete hardware component. The processor may implement or perform the methods, the steps, and logical block diagrams that are disclosed in embodiments of this application. The general-purpose processor may be a microprocessor, or the processor may be any conventional processor or the like. The steps of the method disclosed with reference to embodiments of this application may be directly performed by a hardware decoding processor, or may be performed by using a combination of hardware in the decoding processor and a software module. A software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor.

It may be understood that the memory in this embodiment of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus dynamic random access memory (direct rambus RAM, DR RAM). It should be noted that the memory of the systems and methods described in this specification includes but is not limited to these and any memory of another proper type.

According to the method provided in embodiments of this application, this application further provides a computer program product. The computer program product includes computer program code. When the computer program code is run on a computer, the computer is enabled to perform the method performed by the terminal device or the network device in the foregoing method embodiments.

According to the method provided in embodiments of this application, this application further provides a computer-readable storage medium. The computer-readable storage medium stores program code. When the program code is run on a computer, the computer is enabled to perform the method performed by the terminal device or the network device in the foregoing method embodiments.

According to the methods provided in embodiments of this application, this application further provides a communication system. The communication system includes the terminal device and the network device that are described above.

Terminologies such as "component", "module", and "system" used in this specification are used to indicate computer-related entities, hardware, firmware, combinations of hardware and software, software, or software being executed. For example, a component may be, but is not limited to, a process that runs on a processor, a processor, an object, an executable file, an execution thread, a program, and/or a computer. As illustrated by using figures, both a computing device and an application that runs on the computing device may be components. One or more components may reside within a process and/or an execution thread, and a component may be located on one computer and/or distributed between two or more computers. In addition, these components may be executed from various computer-readable media that store various data structures. For example, the components may communicate by using a local and/or remote process and based on, for example, a signal having one or more data packets (for example, data from two components interacting with another component in a local system, a distributed system, and/or across a network such as the Internet interacting with other systems by using the signal).

A person of ordinary skill in the art may be aware that, in combination with the examples described in embodiments disclosed in this specification, modules and algorithm steps can be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and module, refer to a corresponding process in the foregoing method embodiments, and details are not described herein again.

In the several embodiments provided in this application, it should be understood that the disclosed system, apparatus, and method may be implemented in other manners. For example, the apparatus embodiment described above is merely an example. For example, the module division is merely logical function division and may be other division during actual implementation. For example, a plurality of modules or components may be combined or integrated into another system, or some features may be ignored or not performed. In addition, the displayed or discussed mutual couplings or direct couplings or communication connections may be implemented through some interfaces. The indirect couplings or communication connections between the apparatuses or modules may be implemented in electronic, mechanical, or other forms.

The modules described as separate parts may or may not be physically separate, and parts displayed as modules may or may not be physical modules, may be located in one position, or may be distributed on a plurality of network modules. Some or all the modules may be selected according to actual needs to achieve the objectives of the solutions of embodiments.

In addition, functional modules in embodiments of this application may be integrated into one processing module, or each of the modules may exist alone physically, or two or more modules are integrated into one module.

When the functions are implemented in the form of a software functional module and sold or used as an independent product, the functions may be stored in a computer-readable storage medium. Based on such an understanding, a part that essentially contributes to the technical solutions of this application or a part of the technical solutions may be embodied in a form of a software product. The computer software product is stored in a storage medium, and includes several instructions for enabling a computer device (which may be a personal computer, a server, a network device, or the like) to perform all or some steps of the methods in embodiments of this application. The foregoing storage medium includes any medium that can store program code, such as a USB flash drive, a removable hard disk drive, a ROM, a RAM, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
receiving (210), by a terminal device, first information sent by a network device, wherein the first information comprises configuration information of an m^{th} hybrid automatic repeat request, HARQ process;
determining (220), by the terminal device based on a quantity that is of time units of a downlink time domain resource and that is determined from the configuration information and/or based on an MCS index in the configuration information, whether the m^{th} HARQ process of M HARQ processes between the terminal device and the network device is enabled or disabled, wherein the m^{th} HARQ process is configured as a dynamically adjustable HARQ process, wherein
M is greater than or equal to m, and m is greater than or equal to 1; and
performing, by the terminal device, communication based on a result of the determining;
wherein the determining (220), by the terminal device based on the quantity that is of time units of a downlink time domain resource and that is determined from the configuration information and/or based on the MCS index in the configuration information, whether the m^{th} HARQ process of M HARQ processes between the terminal device and the network device is enabled or disabled comprises:
determining, by the terminal device when the quantity of time units of the downlink time domain resource and a first threshold meet a first relationship, and/or the MCS index in the configuration information and a second threshold meet a second relationship, that the m^{th} HARQ process is disabled, wherein
the first relationship comprises one of the following:
the quantity of time units of the downlink time domain resource is greater than or equal to the first threshold; or
the quantity of time units of the downlink time domain resource is less than or equal to the first threshold; and
the second relationship comprises one of the following:
the MCS index is less than or equal to the second threshold; or
the MCS index is greater than or equal to the second threshold.

2. The method according to claim 1, wherein the determining (220), by the terminal device based on the quantity that is of time units of a downlink time domain resource and that is determined from the configuration information and/or based on the MCS index in the configuration information, whether the m^{th} HARQ process of M HARQ processes between the terminal device and the network device is enabled or disabled comprises:
determining, by the terminal device when the quantity of time units of the downlink time domain resource and a first threshold do not meet a first relationship, or the MCS index in the configuration information and a second threshold do not meet a second relationship, that the m^{th} HARQ process is enabled, wherein
the first relationship comprises one of the following:
the quantity of time units of the downlink time domain resource is greater than or equal to the first threshold; and
the quantity of time units of the downlink time domain resource is less than or equal to the first threshold; and
the second relationship comprises one of the following:
the MCS index is greater than or equal to the second threshold; and
the MCS index is less than or equal to the second threshold.

3. The method according to claim 1 or 2, wherein the first threshold and/or the second threshold are/is related to M.

4. The method according to any one of claims 1 to 3, wherein the first threshold and/or the second threshold are/is related to a first parameter, and the first parameter comprises at least one of the following:
a communication delay between the terminal device and the network device; or
a communication distance between the terminal device and the network device; or
a type of the network device.

5. The method according to any one of claims 1 to 4, wherein the method further comprises:
receiving, by the terminal device, threshold configuration information sent by the network device, wherein the threshold configuration information is used to configure the first threshold and/or the second threshold.

6. The method according to claim 1, wherein before the receiving (210), by the terminal device, first information sent by a network device, the method further comprises:
sending, by the terminal device, a status adjustment request to the network device, wherein the status adjustment request is used to request that the m^{th} HARQ process is enabled or disabled.

7. A communication method, comprising:
determining, by a network device, a transmission parameter of an m^{th} HARQ process, wherein the transmission parameter comprises a quantity of time units of a downlink time domain resource and/or an MCS index;
determining, by the network device based on the transmission parameter, whether the m^{th} HARQ process of M HARQ processes between a terminal device and the network device is enabled or disabled, wherein the m^{th} HARQ process is configured as a dynamically adjustable HARQ process, wherein
M is greater than or equal to m, and m is greater than or equal to 1; and
performing, by the network device, communication based on a result of the determining.
wherein the determining, by the network device based on the transmission parameter, whether the m^{th} HARQ process of M HARQ processes between a terminal device and the network device is enabled or disabled comprises:
determining, by the network device when the quantity of time units of the downlink time domain resource and a first threshold meet a first relationship, and/or the MCS index in configuration information and a second threshold meet a second relationship, that the m^{th} HARQ process is disabled, wherein
the first relationship comprises one of the following:
the quantity of time units of the downlink time domain resource is greater than or equal to the first threshold; or
the quantity of time units of the downlink time domain resource is less than or equal to the first threshold; and
the second relationship comprises one of the following:
the MCS index is less than or equal to the second threshold; or
the MCS index is greater than or equal to the second threshold.

8. The method according to claim 7, wherein the determining, by the network device based on the transmission parameter, whether the m^{th} HARQ process of M HARQ processes between a terminal device and the network device is enabled or disabled comprises:
determining, by the network device when the quantity of time units of the downlink time domain resource and a first threshold do not meet a first relationship, or the MCS index in configuration information and a second threshold do not meet a second relationship, that the m^{th} HARQ process is enabled, wherein
the first relationship comprises one of the following:
the quantity of time units of the downlink time domain resource is greater than or equal to the first threshold; and
the quantity of time units of the downlink time domain resource is less than or equal to the first threshold; and
the second relationship comprises one of the following:
the MCS index is greater than or equal to the second threshold; and
the MCS index is less than or equal to the second threshold.

9. The method according to claim 7 or 8, wherein the first threshold and/or the second threshold are/is related to M.

10. The method according to any one of claims 7 to 9, wherein the first threshold and/or the second threshold are/is related to a first parameter, and the first parameter comprises at least one of the following:
a communication delay between the terminal device and the network device; or
a communication distance between the terminal device and the network device; or
a type of the network device.

11. The method according to any one of claims 7 to 10, wherein the method further comprises:
sending, by the network device, threshold configuration information to the terminal device, wherein the threshold configuration information is used to configure the first threshold and/or the second threshold.

12. The method according to any one of claims 7 to 11, wherein the method further comprises:
sending, by the network device, first information to the terminal device, wherein the first information comprises the configuration information of the m^{th} HARQ process, the configuration information is used to determine the quantity of time units of the downlink time domain resource, and/or the configuration information comprises the MCS index.

13. A communication apparatus, comprising a processor and a memory, wherein the memory is configured to store a computer program, and the processor is configured to invoke and run the computer program stored in the memory, to perform the method according to any one of claims 1 to 6 or 7 to 12.

14. A computer-readable storage medium, configured to store computer program instructions, which when executed by a computer, cause the computer to perform the method according to any one of claims 1 to 6 or 7 to 12.

15. A computer program product, comprising computer program instructions, wherein when the computer program is executed by a computer, cause the computer to perform the method according to any one of claims 1 to 6 or 7 to 12.

## Patentansprüche

1. Kommunikationsverfahren, das Folgendes umfasst:
Empfangen (210), durch eine Endgerätevorrichtung, von ersten Informationen, die durch eine Netzvorrichtung gesendet werden, wobei die ersten Informationen Konfigurationsinformationen eines m-ten "Hybrid Automatic Repeat Request"- bzw. HARQ-Prozesses umfassen;
Bestimmen (220), durch die Endgerätevorrichtung basierend auf einer Anzahl von Zeiteinheiten einer Downlink-Zeitbereichsressource, die anhand der Konfigurationsinformationen und/oder basierend auf einem MCS-Index in den Konfigurationsinformationen bestimmt wird, ob der m-te HARQ-Prozess von M HARQ-Prozessen zwischen der Endgerätevorrichtung und der Netzvorrichtung freigegeben oder gesperrt ist, wobei der m-te HARQ-Prozess als ein dynamisch anpassbarer HARQ-Prozess konfiguriert ist, wobei
M größer oder gleich m ist und m größer oder gleich 1 ist; und
Durchführen, durch die Endgerätevorrichtung, einer Kommunikation basierend auf einem Ergebnis des Bestimmens;
wobei das Bestimmen (220), durch die Endgerätevorrichtung basierend auf der Anzahl von Zeiteinheiten einer Downlink-Zeitbereichsressource, die anhand der Konfigurationsinformationen und/oder basierend auf dem MCS-Index in den Konfigurationsinformationen bestimmt wird, ob der m-te HARQ-Prozess von M HARQ-Prozessen zwischen der Endgerätevorrichtung und der Netzvorrichtung freigegeben oder gesperrt ist, Folgendes umfasst:
Bestimmen, durch die Endgerätevorrichtung, wenn die Anzahl von Zeiteinheiten der Downlink-Zeitbereichsressource und eine erste Schwelle eine erste Beziehung erfüllen und/oder der MCS-Index in den Konfigurationsinformationen und eine zweite Schwelle eine zweite Beziehung erfüllen, dass der m-te HARQ-Prozess gesperrt ist, wobei
die erste Beziehung eines der Folgenden umfasst:
die Anzahl von Zeiteinheiten der Downlink-Zeitbereichsressource ist größer oder gleich der ersten Schwelle; oder
die Anzahl von Zeiteinheiten der Downlink-Zeitbereichsressource ist kleiner oder gleich der ersten Schwelle; und
die zweite Beziehung eines der Folgenden umfasst:
der MCS-Index ist kleiner oder gleich der zweiten Schwelle; oder
der MCS-Index ist größer oder gleich der zweiten Schwelle.

2. Verfahren nach Anspruch 1, wobei das Bestimmen (220), durch die Endgerätevorrichtung basierend auf der Anzahl von Zeiteinheiten einer Downlink-Zeitbereichsressource, die anhand der Konfigurationsinformationen und/oder basierend auf dem MCS-Index in den Konfigurationsinformationen bestimmt wird, ob der m-te HARQ-Prozess von M HARQ-Prozessen zwischen der Endgerätevorrichtung und der Netzvorrichtung freigegeben oder gesperrt ist, Folgendes umfasst:
Bestimmen, durch die Endgerätevorrichtung, wenn die Anzahl von Zeiteinheiten der Downlink-Zeitbereichsressource und eine erste Schwelle eine erste Beziehung nicht erfüllen oder der MCS-Index in den Konfigurationsinformationen und eine zweite Schwelle eine zweite Beziehung nicht erfüllen, dass der m-te HARQ-Prozess freigegeben ist, wobei
die erste Beziehung eines der Folgenden umfasst:
die Anzahl von Zeiteinheiten der Downlink-Zeitbereichsressource ist größer oder gleich der ersten Schwelle; und
die Anzahl von Zeiteinheiten der Downlink-Zeitbereichsressource ist kleiner oder gleich der ersten Schwelle; und
die zweite Beziehung eines der Folgenden umfasst:
der MCS-Index ist größer oder gleich der zweiten Schwelle; und
der MCS-Index ist kleiner oder gleich der zweiten Schwelle.

3. Verfahren nach Anspruch 1 oder 2, wobei die erste Schwelle und/oder die zweite Schwelle mit M in Beziehung stehen/steht.

4. Verfahren nach einem der Ansprüche 1 bis 3, wobei die erste Schwelle und/oder die zweite Schwelle mit einem ersten Parameter in Beziehung stehen/steht und der erste Parameter mindestens eines der Folgenden umfasst:
eine Kommunikationsverzögerung zwischen der Endgerätevorrichtung und der Netzvorrichtung; oder
einen Kommunikationsabstand zwischen der Endgerätevorrichtung und der Netzvorrichtung; oder
eine Art der Netzvorrichtung.

5. Verfahren nach einem der Ansprüche 1 bis 4, wobei das Verfahren ferner Folgendes umfasst:
Empfangen, durch die Endgerätevorrichtung, von Schwellenkonfigurationsinformationen, die durch die Netzvorrichtung gesendet werden, wobei die Schwellenkonfigurationsinformationen verwendet werden, um die erste Schwelle und/oder die zweite Schwelle zu konfigurieren.

6. Verfahren nach Anspruch 1, wobei das Verfahren vor dem Empfangen (210), durch die erste Endgerätevorrichtung, von ersten Informationen, die durch eine Netzvorrichtung gesendet werden, ferner Folgendes umfasst:
Senden, durch die Endgerätevorrichtung, einer Statusanpassungsanforderung an die Netzvorrichtung, wobei die Statusanpassungsanforderung verwendet wird, um anzufordern, dass der m-te HARQ-Prozess freigegeben oder gesperrt wird.

7. Kommunikationsverfahren, das Folgendes umfasst:
Bestimmen, durch eine Netzvorrichtung, eines Übertragungsparameters eines m-ten HARQ-Prozesses, wobei der Übertragungsparameter eine Anzahl von Zeiteinheiten einer Downlink-Zeitbereichsressource und/oder einen MCS-Index umfasst;
Bestimmen, durch die Netzvorrichtung basierend auf dem Übertragungsparameter, ob der m-te HARQ-Prozess von M HARQ-Prozessen zwischen einer Endgerätevorrichtung und der Netzvorrichtung freigegeben oder gesperrt ist, wobei der m-te HARQ-Prozess als ein dynamisch anpassbarer HARQ-Prozess konfiguriert ist, wobei
M größer oder gleich m ist und m größer oder gleich 1 ist; und
Durchführen, durch die Netzvorrichtung, einer Kommunikation basierend auf einem Ergebnis des Bestimmens;
wobei das Bestimmen, durch die Netzvorrichtung basierend auf dem Übertragungsparameter, ob der m-te HARQ-Prozess von M HARQ-Prozessen zwischen einer Endgerätevorrichtung und der Netzvorrichtung freigegeben oder gesperrt ist, Folgendes umfasst:
Bestimmen, durch die Netzvorrichtung, wenn die Anzahl von Zeiteinheiten der Downlink-Zeitbereichsressource und eine erste Schwelle eine erste Beziehung erfüllen und/oder der MCS-Index in Konfigurationsinformationen und eine zweite Schwelle eine zweite Beziehung erfüllen, dass der m-te HARQ-Prozess gesperrt ist, wobei
die erste Beziehung eines der Folgenden umfasst:
die Anzahl von Zeiteinheiten der Downlink-Zeitbereichsressource ist größer oder gleich der ersten Schwelle; oder
die Anzahl von Zeiteinheiten der Downlink-Zeitbereichsressource ist kleiner oder gleich der ersten Schwelle; und
die zweite Beziehung eines der Folgenden umfasst:
der MCS-Index ist kleiner oder gleich der zweiten Schwelle; oder
der MCS-Index ist größer oder gleich der zweiten Schwelle.

8. Verfahren nach Anspruch 7, wobei das Bestimmen, durch die Netzvorrichtung basierend auf dem Übertragungsparameter, ob der m-te HARQ-Prozess von M HARQ-Prozessen zwischen einer Endgerätevorrichtung und der Netzvorrichtung freigegeben oder gesperrt ist, Folgendes umfasst:
Bestimmen, durch die Netzvorrichtung, wenn die Anzahl von Zeiteinheiten der Downlink-Zeitbereichsressource und eine erste Schwelle eine erste Beziehung nicht erfüllen oder der MCS-Index in Konfigurationsinformationen und eine zweite Schwelle eine zweite Beziehung nicht erfüllen, dass der m-te HARQ-Prozess freigegeben ist, wobei
die erste Beziehung eines der Folgenden umfasst:
die Anzahl von Zeiteinheiten der Downlink-Zeitbereichsressource ist größer oder gleich der ersten Schwelle; und
die Anzahl von Zeiteinheiten der Downlink-Zeitbereichsressource ist kleiner oder gleich der ersten Schwelle; und
die zweite Beziehung eines der Folgenden umfasst:
der MCS-Index ist größer oder gleich der zweiten Schwelle; und
der MCS-Index ist kleiner oder gleich der zweiten Schwelle.

9. Verfahren nach Anspruch 7 oder 8, wobei die erste Schwelle und/oder die zweite Schwelle mit M in Beziehung stehen/steht.

10. Verfahren nach einem der Ansprüche 7 bis 9, wobei die erste Schwelle und/oder die zweite Schwelle mit einem ersten Parameter in Beziehung stehen/steht und der erste Parameter mindestens eines der Folgenden umfasst:
eine Kommunikationsverzögerung zwischen der Endgerätevorrichtung und der Netzvorrichtung; oder
einen Kommunikationsabstand zwischen der Endgerätevorrichtung und der Netzvorrichtung; oder
eine Art der Netzvorrichtung.

11. Verfahren nach einem der Ansprüche 7 bis 10, wobei das Verfahren ferner Folgendes umfasst:
Senden, durch die Netzvorrichtung, von Schwellenkonfigurationsinformationen an die Endgerätevorrichtung, wobei die Schwellenkonfigurationsinformationen verwendet werden, um die erste Schwelle und/oder die zweite Schwelle zu konfigurieren.

12. Verfahren nach einem der Ansprüche 7 bis 11, wobei das Verfahren ferner Folgendes umfasst:
Senden, durch die Netzvorrichtung, von ersten Informationen an die Endgerätevorrichtung, wobei die ersten Informationen die Konfigurationsinformationen des m-ten HARQ-Prozesses umfassen, die Konfigurationsinformationen verwendet werden, um die Anzahl von Zeiteinheiten der Downlink-Zeitbereichsressource zu bestimmen, und/oder die Konfigurationsinformationen den MCS-Index umfassen.

13. Kommunikationseinrichtung, die einen Prozessor und einen Speicher umfasst, wobei der Speicher dazu ausgelegt ist, ein Computerprogramm zu speichern, und der Prozessor dazu ausgelegt ist, das in dem Speicher gespeicherte Computerprogramm aufzurufen und auszuführen, um das Verfahren nach einem der Ansprüche 1 bis 6 oder 7 bis 12 durchzuführen.

14. Computerlesbares Speichermedium, das dazu ausgelegt ist, Computerprogrammanweisungen zu speichern, die bei Ausführung durch einen Computer bewirken, dass der Computer das Verfahren nach einem der Ansprüche 1 bis 6 oder 7 bis 12 durchführt.

15. Computerprogrammprodukt, das Computerprogrammanweisungen umfasst, wobei eine Ausführung des Computerprogramms durch einen Computer bewirkt, dass der Computer das Verfahren nach einem der Ansprüche 1 bis 6 oder 7 bis 12 durchführt.

## Revendications

1. Procédé de communication, comprenant :
la réception (210), par un dispositif terminal, de premières informations envoyées par un dispositif de réseau, les premières informations comprenant des informations de configuration d'un m-ième processus de demande de répétition automatique hybride, HARQ ;
la détermination (220), par le dispositif terminal sur la base d'une quantité d'unités de temps d'une ressource de liaison descendante dans le domaine temporel qui est déterminée à partir des informations de configuration et/ou sur la base d'un indice MCS dans les informations de configuration, si le m-ième processus HARQ parmi M processus HARQ entre le dispositif terminal et le dispositif de réseau est activé ou désactivé, le m-ième processus HARQ étant configuré comme un processus HARQ ajustable de manière dynamique,
M étant supérieur ou égal à m, et m étant supérieur ou égal à 1 ; et
la réalisation, par le dispositif terminal, d'une communication sur la base d'un résultat de la détermination ;
dans lequel la détermination (220), par le dispositif terminal sur la base de la quantité d'unités de temps d'une ressource de liaison descendante dans le domaine temporel qui est déterminée à partir des informations de configuration et/ou sur la base de l'indice MCS dans les informations de configuration, si le m-ième processus HARQ parmi M processus HARQ entre le dispositif terminal et le dispositif de réseau est activé ou désactivé comprend :
la détermination, par le dispositif terminal lorsque la quantité d'unités de temps de la ressource de liaison descendante dans le domaine temporel et un premier seuil satisfont à une première relation, et/ou que l'indice MCS dans les informations de configuration et un deuxième seuil satisfont à une deuxième relation, que le m-ième processus HARQ est désactivé,
la première relation comprenant l'un des éléments suivants :
la quantité d'unités de temps de la ressource de liaison descendante dans le domaine temporel est supérieure ou égale au premier seuil ; ou
la quantité d'unités de temps de la ressource de liaison descendante dans le domaine temporel est inférieure ou égale au premier seuil ; et
la deuxième relation comprenant l'un des éléments suivants :
l'indice MCS est inférieur ou égal au deuxième seuil ; ou
l'indice MCS est supérieur ou égal au deuxième seuil.

2. Procédé selon la revendication 1, dans lequel la détermination (220), par le dispositif terminal sur la base de la quantité d'unités de temps d'une ressource de liaison descendante dans le domaine temporel qui est déterminée à partir des informations de configuration et/ou sur la base de l'indice MCS dans les informations de configuration, si le m-ième processus HARQ parmi M processus HARQ entre le dispositif terminal et le dispositif de réseau est activé ou désactivé comprend :
la détermination, par le dispositif terminal lorsque la quantité d'unités de temps de la ressource de liaison descendante dans le domaine temporel et un premier seuil ne satisfont pas à une première relation, ou que l'indice MCS dans les informations de configuration et un deuxième seuil ne satisfont pas à une deuxième relation, que le m-ième processus HARQ est activé,
la première relation comprenant l'un des éléments suivants :
la quantité d'unités de temps de la ressource de liaison descendante dans le domaine temporel est supérieure ou égale au premier seuil ; et
la quantité d'unités de temps de la ressource de liaison descendante dans le domaine temporel est inférieure ou égale au premier seuil ; et
la deuxième relation comprenant l'un des éléments suivants :
l'indice MCS est supérieur ou égal au deuxième seuil ; et
l'indice MCS est inférieur ou égal au deuxième seuil.

3. Procédé selon la revendication 1 ou 2, dans lequel le premier seuil et/ou le deuxième seuil sont liés à M.

4. Procédé selon l'une quelconque des revendications 1 à 3, dans lequel le premier seuil et/ou le deuxième seuil sont liés à un premier paramètre, et le premier paramètre comprend au moins l'un des éléments suivants :
un délai de communication entre le dispositif terminal et le dispositif de réseau ; ou
une distance de communication entre le dispositif terminal et le dispositif de réseau ; ou
un type du dispositif de réseau.

5. Procédé selon l'une quelconque des revendications 1 à 4, le procédé comprenant en outre :
la réception, par le dispositif terminal, d'informations de configuration de seuil envoyées par le dispositif de réseau, les informations de configuration de seuil étant utilisées pour configurer le premier seuil et/ou le deuxième seuil.

6. Procédé selon la revendication 1, le procédé comprenant en outre, avant la réception (210), par le dispositif terminal, de premières informations envoyées par un dispositif de réseau :
l'envoi, par le dispositif terminal, d'une demande d'ajustement d'état au dispositif de réseau, la demande d'ajustement d'état étant utilisée pour demander que le m-ième processus HARQ soit activé ou désactivé.

7. Procédé de communication, comprenant :
la détermination, par un dispositif de réseau, d'un paramètre de transmission d'un m-ième processus HARQ, le paramètre de transmission comprenant une quantité d'unités de temps d'une ressource de liaison descendante dans le domaine temporel et/ou un indice MCS ;
la détermination, par le dispositif de réseau sur la base du paramètre de transmission, si le m-ième processus HARQ parmi M processus HARQ entre un dispositif terminal et le dispositif de réseau est activé ou désactivé, le m-ième processus HARQ étant configuré comme un processus HARQ ajustable de manière dynamique,
M étant supérieur ou égal à m, et m étant supérieur ou égal à 1 ; et
la réalisation, par le dispositif de réseau, d'une communication sur la base d'un résultat de la détermination ;
dans lequel la détermination, par le dispositif de réseau sur la base du paramètre de transmission, si le m-ième processus HARQ parmi M processus HARQ entre un dispositif terminal et le dispositif de réseau est activé ou désactivé comprend :
la détermination, par le dispositif de réseau lorsque la quantité d'unités de temps de la ressource de liaison descendante dans le domaine temporel et un premier seuil satisfont à une première relation, et/ou que l'indice MCS dans des informations de configuration et un deuxième seuil satisfont à une deuxième relation, que le m-ième processus HARQ est désactivé,
la première relation comprenant l'un des éléments suivants :
la quantité d'unités de temps de la ressource de liaison descendante dans le domaine temporel est supérieure ou égale au premier seuil ; ou
la quantité d'unités de temps de la ressource de liaison descendante dans le domaine temporel est inférieure ou égale au premier seuil ; et
la deuxième relation comprenant l'un des éléments suivants :
l'indice MCS est inférieur ou égal au deuxième seuil ; ou
l'indice MCS est supérieur ou égal au deuxième seuil.

8. Procédé selon la revendication 7, dans lequel la détermination, par le dispositif de réseau sur la base du paramètre de transmission, si le m-ième processus HARQ parmi M processus HARQ entre un dispositif terminal et le dispositif de réseau est activé ou désactivé comprend :
la détermination, par le dispositif de réseau lorsque la quantité d'unités de temps de la ressource de liaison descendante dans le domaine temporel et un premier seuil ne satisfont pas à une première relation, ou que l'indice MCS dans des informations de configuration et un deuxième seuil ne satisfont pas à une deuxième relation, que le m-ième processus HARQ est activé,
la première relation comprenant l'un des éléments suivants :
la quantité d'unités de temps de la ressource de liaison descendante dans le domaine temporel est supérieure ou égale au premier seuil ; et
la quantité d'unités de temps de la ressource de liaison descendante dans le domaine temporel est inférieure ou égale au premier seuil ; et
la deuxième relation comprenant l'un des éléments suivants :
l'indice MCS est supérieur ou égal au deuxième seuil ; et
l'indice MCS est inférieur ou égal au deuxième seuil.

9. Procédé selon la revendication 7 ou 8, dans lequel le premier seuil et/ou le deuxième seuil sont liés à M.

10. Procédé selon l'une quelconque des revendications 7 à 9, dans lequel le premier seuil et/ou le deuxième seuil sont liés à un premier paramètre, et le premier paramètre comprend au moins l'un des éléments suivants :
un délai de communication entre le dispositif terminal et le dispositif de réseau ; ou
une distance de communication entre le dispositif terminal et le dispositif de réseau ; ou
un type du dispositif de réseau.

11. Procédé selon l'une quelconque des revendications 7 à 10, le procédé comprenant en outre :
l'envoi, par le dispositif de réseau, d'informations de configuration de seuil au dispositif terminal, les informations de configuration de seuil étant utilisées pour configurer le premier seuil et/ou le deuxième seuil.

12. Procédé selon l'une quelconque des revendications 7 à 11, le procédé comprenant en outre :
l'envoi, par le dispositif de réseau, de premières informations au dispositif terminal, les premières informations comprenant les informations de configuration du m-ième processus HARQ, les informations de configuration étant utilisées pour déterminer la quantité d'unités de temps de la ressource de liaison descendante dans le domaine temporel et/ou les informations de configuration comprenant l'indice MCS.

13. Appareil de communication, comprenant un processeur et une mémoire, la mémoire étant configurée pour stocker un programme d'ordinateur, et le processeur étant configuré pour appeler et exécuter le programme d'ordinateur stocké dans la mémoire, afin de réaliser le procédé selon l'une quelconque des revendications 1 à 6 ou 7 à 12.

14. Support de stockage lisible par ordinateur, configuré pour stocker des instructions de programme d'ordinateur qui, lorsqu'elles sont exécutées par un ordinateur, amènent l'ordinateur à réaliser le procédé selon l'une quelconque des revendications 1 à 6 ou 7 à 12.

15. Produit programme d'ordinateur, comprenant des instructions de programme d'ordinateur, lesquelles, lorsque le programme d'ordinateur est exécuté par un ordinateur, amènent l'ordinateur à réaliser le procédé selon l'une quelconque des revendications 1 à 6 ou 7 à 12.
